# EUROPEAN PATENT APPLICATION

(11) **EP 4 408 055 A1**
(43) Date of publication of application: **31.07.2024**
(21) Application number: 22874858.8
(22) Date of filing: 26.09.2022
(51) Int. Cl.: H04W 24/02

(54) **SIGNAL SENDING METHOD, SIGNAL RECEIVING METHOD AND COMMUNICATION APPARATUS**

(30) Priority: 28.09.2021 CN 202111143987
(71) Applicant: Huawei Technologies Co., Ltd., Shenzhen, Guangdong 518129 (CN)
(72) Inventor: HOU, Hailong, Shenzhen, Guangdong 518129 (CN); JIN, Zhe, Shenzhen, Guangdong 518129 (CN); LUO, Zhihu, Shenzhen, Guangdong 518129 (CN); QU, Weilin, Shenzhen, Guangdong 518129 (CN)
(74) Representative: Gill Jennings & Every LLP
(86) International application number: PCT/CN2022/121395
(87) International publication number: WO 2023/051473

(57) **Abstract**

This application discloses a signal sending method, a signal receiving method, and a communication apparatus. The method includes: A network device determines a first SSB and a second SSB, sends the first SSB in a first BWP, and sends the second SSB in a second BWP. Transmit power of the first SSB is different from transmit power of the second SSB. The first BWP may be considered as a BWP of a first-type terminal device, and the second BWP may be considered as a BWP of a second-type terminal device. The network device may send the first SSB in the first BWP, and send the second SSB in the second BWP. The second-type terminal device obtains an SSB from the network device without switching from the second BWP to the first BWP, to reduce a quantity of BWP switching times, so as to reduce power consumption. In addition, the transmit power of the first SSB is allowed to be different from the transmit power of the second SSB, for example, the transmit power of the second SSB is lower than the transmit power of the first SSB. In this way, impact of introduction of the second SSB on transmission performance of another channel or signal can be reduced as much as possible.

## Description

### CROSS-REFERENCE TO RELATED APPLICATIONS

This application claims priority to Chinese Patent Application No. 202111143987.9, filed with the China National Intellectual Property Administration on September 28, 2021 and entitled "SIGNAL SENDING METHOD, SIGNAL RECEIVING METHOD, AND COMMUNICATION APPARATUS", which is incorporated herein by reference in its entirety.

### TECHNICAL FIELD

This application relates to the field of mobile communication technologies, and in particular, to a signal sending method, a signal receiving method, and a communication apparatus.

### BACKGROUND

With development of mobile communication technologies, services are increasingly diversified, for example, including enhanced mobile broadband (enhanced mobile broadband, eMBB), ultra-reliable low-latency communication (ultra-reliable low-latency communication, URLLC), and massive machine-type communications (massive machine-type communications, mMTC). Typical mMTC services include, for example, an industrial wireless sensor network (industrial wireless sensor network, IWSN) service, a video surveillance (video surveillance) service, and a wearables (wearables) service. Different services have different requirements on capabilities of terminal devices. For example, a service that does not require a high data transmission rate may be implemented by a machine-type terminal device that has a weak capability and that is implemented with low costs. Therefore, compared with a common terminal device, the machine-type terminal device can reduce an implementation specification, to reduce implementation costs. In this case, in a system, there may be two types of terminal devices having different capabilities: a common terminal device and a machine-type terminal device.

A network device usually broadcasts a synchronization signal and physical broadcast channel block (synchronization signal and (physical broadcast channel, PBCH) block, SSB), which is used by a terminal device to initially access a cell and so on. Because the common terminal device and the machine-type terminal device have different capabilities, the network device configures different initial downlink bandwidth parts (bandwidth parts, BWPs) for the common terminal device and the machine-type terminal device. For example, the network device configures a first BWP for the common terminal device, and configures a second BWP for the machine-type terminal device. The network device may send an SSB in the first BWP, and the common terminal device and the machine-type terminal device may receive the SSB in the first BWP. Currently, the network device may also send an SSB in the second BWP. In this case, the machine-type terminal device needs to receive the SSB only in the second BWP, and does not need to switch from the second BWP to the first BWP, to reduce energy consumption.

However, power of the SSB is usually higher than power of another channel (or signal). This may also be understood as that a power spectrum density (power spectrum density, PSD) on a time-frequency resource carrying the SSB is higher than a PSD on a time-frequency resource carrying the another channel (or signal). It may be understood that power on a same time-frequency resource is fixed. If an additional SSB is introduced on a time-frequency resource, a PSD of another channel (or signal) on the time-frequency resource is reduced. As a result, transmission performance of the another channel (or signal) is low. To be specific, if the network device sends the SSBs in the first BWP and the second BWP, transmission performance of another channel or signal within a bandwidth range of the first BWP and the second BWP is low.

### SUMMARY

This application provides a signal sending method, a signal receiving method, and a communication apparatus, to reduce impact of introduction of an additional SSB on transmission performance of another channel or signal.

According to a first aspect, a signal sending method is provided, and may be performed by a first communication apparatus. The first communication apparatus may be a communication device or a communication apparatus that can support the communication device in implementing a function required by the method, for example, a chip system. An example in which the communication device is a network device is used below for description. The method includes the following steps.

The network device determines a first SSB and a second SSB, sends the first SSB on a first BWP, and sends the second SSB on a second BWP. Transmit power of the first SSB is different from transmit power of the second SSB. Alternatively, a sum of the transmit power of the first SSB and the transmit power of the second SSB is the same in a first time unit and a second time unit.

Correspondingly, according to a second aspect, a signal receiving method is provided, and may be performed by a second communication apparatus. The second communication apparatus may be a communication device or a communication apparatus that can support the communication device in implementing a function required by the method, for example, a chip system. An example in which the communication device is a terminal device is used below for description. The method includes the following steps.

The terminal device receives a first SSB on a first BWP, and/or receives a second SSB on a second BWP. Then, the terminal device performs measurement based on the first SSB and/or the second SSB, for example, performs radio resource management (radio resource management, RRM) measurement or radio link management (radio link management, RLM) measurement. Transmit power of the first SSB is different from transmit power of the second SSB. Alternatively, a sum of the transmit power of the first SSB and the transmit power of the second SSB is the same in a first time unit and a second time unit.

In embodiments of this application, the network device can configure BWPs separately for different types of terminal devices (for example, a first-type terminal device and a second-type terminal device), for example, configure the first BWP for the first-type terminal device and the second BWP for the second-type terminal device. The network device may send the first SSB in the first BWP, and send the second SSB in the second BWP. The technical solution of this application can be used to avoid high power consumption caused because that the second-type terminal device frequently switches from the second BWP to the first BWP to obtain an SSB from the network device. Therefore, according to the technical solutions provided in this application, the second SSB may be directly sent in the second BWP, that is, a quantity of BWP switching times may be reduced, to reduce power consumption of the terminal device. In addition, in embodiments of this application, the transmit power of the first SSB is allowed to be different from the transmit power of the second SSB. For example, the network device may configure the transmit power of the second SSB to be lower than the transmit power of the first SSB. In this way, a total PSD on the bandwidth in which the first BWP and the second BWP are located can be reduced as much as possible, to reduce impact on transmission performance of another channel or signal within a range of the bandwidth. In addition, in embodiments of this application, the sum of the transmit power of the first SSB and the transmit power of the second SSB is the same in the first time unit and the second time unit. In other words, total power of the transmit power of the first SSB and the transmit power of the second SSB remains unchanged. In this way, it can be avoided that transmit power of one SSB in the transmit power of the first SSB and the transmit power of the second SSB is always higher than transmit power of the other SSB. For a terminal device that receives an SSB with lower transmit power, transmission performance can be improved.

In a possible implementation of the first aspect or the second aspect, the first SSB and the second SSB have the following correspondence: The transmit power of the first SSB is different from the transmit power of the second SSB in a same time unit, the transmit power of the first SSB varies in different time units, and the transmit power of the second SSB varies in different time units. In this solution, the transmit power of the first SSB is allowed to be different in the different time units. In this way, the network device may adjust the transmit power of the first SSB based on a service requirement of the first-type terminal device, so that the transmit power of the first SSB adapts to an actual service requirement of the first-type terminal device, to increase a service transmission rate of the first-type terminal device. Similarly, the transmit power of the second SSB is allowed to be different in different time units, and the transmit power of the second SSB may be adjusted based on an actual service requirement of the second-type terminal device, to increase a service transmission rate of the second-type terminal device. In addition, in this solution, the transmit power of the first SSB is allowed to be different from the transmit power of the second SSB in a same time unit, to reduce impact on transmission performance of another channel or signal on a time-frequency resource that carries the first SSB and the second SSB. The network device may flexibly adjust the transmit power of the first SSB and the transmit power of the second SSB based on an actual requirement, to improve transmission performance of the terminal device as much as possible, and reduce the impact on the transmission performance of the another channel or signal.

In a possible implementation of the first aspect or the second aspect, the first SSB and the second SSB have the following correspondence: A time domain resource occupied by the first SSB is different from a time domain resource occupied by the second SSB. It may be understood that, if the time domain resource occupied by the first SSB is the same as the time domain resource occupied by the second SSB, transmit power of a signal on a time-frequency resource in which the time domain resource is located is high. In this case, a PSD of another channel or signal on the time-frequency resource is lower. However, in the solution used in this application, the time domain resource occupied by the first SSB is allowed to be different from the time domain resource occupied by the second SSB, and total transmit power of the first SSB and the second SSB of the signal on the time-frequency resource in which the time domain resource is located can be reduced as much as possible. Therefore, impact on transmission performance of the another channel or signal on the time-frequency resource is further reduced. In addition, because the time domain resource occupied by the first SSB is different from the time domain resource occupied by the second SSB, the terminal device may receive the first SSB and the second SSB in a time division manner, to obtain more SSBs in a same time unit, so that an obtained measurement result of the SSB is more accurate, and transmission performance of the terminal device is improved.

There are a plurality of different implementation forms in which the time domain resource occupied by the first SSB is different from the time domain resource occupied by the second SSB, for example, including but not limited to the following three implementation forms. The network device may configure the time domain resource occupied by the first SSB and the time domain resource occupied by the second SSB based on one or more of the following implementation forms. This is more flexible.

Implementation form 1: A time domain position of a synchronization signal burst of the first SSB is different from a time domain position of a synchronization signal burst of the second SSB.

Implementation form 2: A sending periodicity of the first SSB is different from a sending periodicity of the second SSB. To be specific, by configuring different sending periodicities, the time domain resource occupied by the first SSB may be different from the time domain resource occupied by the second SSB. In this solution, the network device may flexibly adjust the sending periodicity of the first SSB and/or the sending periodicity of the second SSB based on an actual energy saving requirement of the terminal device, to reduce power consumption of the terminal device as much as possible. For example, compared with the second-type terminal device, the first-type terminal device has a lower requirement on power consumption. In this case, the sending periodicity of the first SSB is larger than the sending periodicity of the second SSB, to meet a low power consumption requirement of the second-type terminal device.

Implementation form 3: A quantity of SSB beams in a synchronization signal burst of the first SSB is different from a quantity of SSB beams in a synchronization signal burst of the second SSB. To be specific, different quantities of SSB beams are configured, so that the time domain resource occupied by the first SSB is different from the time domain resource occupied by the second SSB. In this solution, different quantities of SSB beams are allowed to be configured, so that the time domain resource occupied by the first SSB is different from the time domain resource occupied by the second SSB. Therefore, the network device may adjust, based on coverage performance of the terminal device, a quantity of SSB beams corresponding to the terminal device, to increase a service transmission rate of the terminal device within coverage as much as possible.

In a possible implementation of the first aspect or the second aspect, the transmit power of the first SSB is at least one of the following power: power of an SSS, power of a PSS, power of a PBCH, or power of a demodulation reference signal (demodulation reference signal, DMRS) used for the PBCH. In embodiments of this application, transmit power of the SSB is not limited. For example, the transmit power of the SSB may be the power of the SSS, the power of the PSS, or the like.

In a possible implementation of the first aspect, the method further includes: The network device sends indication information. Correspondingly, in a possible implementation of the second aspect, the terminal device receives the indication information. The indication information indicates the transmit power of the second SSB. Alternatively, the indication information indicates a power offset, and the power offset is a difference between the transmit power of the second SSB and the transmit power of the first SSB. In this solution, the network device may notify the transmit power of the second SSB to the terminal device, to assist the terminal device in inferring a path loss of a sent signal based on the transmit power, so that transmit power of a to-be-sent signal is flexibly adjusted, and signal transmission reliability is improved. The network device may directly indicate the transmit power of the second SSB. For example, the indication information includes the transmit power of the second SSB. Alternatively, the network device may indirectly indicate the transmit power of the second SSB. For example, the indication information includes the difference between the transmit power of the second SSB and the transmit power of the first SSB: the power offset. It may be understood that, if the network device does not send the indication information, it may be considered by default that the transmit power of the second SSB is the same as the transmit power of the first SSB.

It may be understood that the terminal device may perform RRM measurement based on a received SSB. In embodiments of this application, the network device sends the first SSB in the first BWP, and also sends the second SSB in the second BWP. The second-type terminal device may receive the first SSB in the first BWP, and may also receive the second SSB in the second BWP. In a possible implementation of the first aspect, it may be specified that an SSB used for the RRM measurement is an SSB in a BWP in which a paging resource is located. In other words, the paging resource is located in the first BWP, and the SSB used for the RRM measurement is the first SSB. The paging resource is located in the second BWP, and the SSB used for the RRM measurement is the second SSB. If the paging resource is located in the first BWP and the second BWP, the SSB used for the RRM measurement may be the first SSB and/or the second SSB. Correspondingly, if the second-type terminal device determines that the paging resource is located in the first BWP, the second-type terminal device performs the RRM measurement based on the first SSB. If the second-type terminal device determines that the paging resource is located in the second BWP, the second-type terminal device performs the RRM measurement based on the second SSB. If the second-type terminal device determines that the paging resource is located in the first BWP and the second BWP, the second-type terminal device performs the RRM measurement based on the first SSB and the second SSB. In this way, it can be ensured that the second-type terminal device performs the RRM measurement in a process of monitoring paging, and does not need to perform BWP switching, to reduce power consumption of the second-type terminal device.

In a possible implementation of the first aspect or the second aspect, transmit power of the SSB used for the RRM measurement is greater than a preset threshold. It may be understood that, if the transmit power of the SSB is low, accuracy of a measurement result obtained based on the SSB is low. Therefore, accuracy of determining cell coverage is also low. Therefore, in embodiments of this application, it is specified that only an SSB whose transmit power is higher than the preset threshold is used for the RRM measurement. This can improve the accuracy of determining the cell coverage.

In an alternative implementation, the transmit power of the SSB used for the RRM measurement may be lower than the preset threshold. In this case, an actual measurement result of the SSB may be adjusted, and an adjusted measurement result is used as a final RRM measurement result. For example, the RRM measurement result is a sum of the measurement result of the SSB and an offset, and the offset is related to the transmit power of the first SSB and the transmit power of the second SSB. For example, the offset is a difference between the transmit power of the first SSB and the transmit power of the second SSB. Although the transmit power of the SSB used for the RRM measurement is low, an accurate RRM measurement result can be obtained by using the obtained actual measurement result of the SSB, to improve the accuracy of determining the cell coverage.

In a possible implementation of the first aspect, the method further includes: The network device sends first information in the first BWP and/or the second BWP. Correspondingly, in a possible implementation of the second aspect, the method further includes: The terminal device receives the first information in the first BWP and/or the second BWP. The first information includes a paging message, a system message, a random access response message, or a contention resolution message. A DMRS antenna port of a physical downlink shared channel (physical downlink shared channel, PDSCH) that carries the first information has a QCL relationship with the first SSB or the second SSB, and/or a DMRS antenna port of a physical downlink control channel (physical downlink control channel, PDCCH) for scheduling the first information has a QCL relationship with the first SSB or the second SSB. It may be understood that the terminal device may infer, based on an SSB that has a QCL relationship with a channel for sending the first information, some characteristics of the channel for sending the first information. When the second SSB is additionally introduced, both the first SSB and the second SSB exist. In this case, when the network device sends the first information in the first BWP and/or the second BWP, the terminal device may infer, based on the first SSB or the second SSB, the some characteristics of the channel for sending the first information. Therefore, it is specified in this solution that the DMRS antenna port of the PDSCH that carries the first information has the QCL relationship with the first SSB or the second SSB, or the DMRS antenna port of the PDCCH for scheduling the first information has the QCL relationship with the first SSB or the second SSB. In other words, when the first SSB and the second SSB exist, a specific SSB having the QCL relationship with the channel for sending the first information is clearly specified, to ensure accuracy of the interred characteristics of the PDSCH or the PDCCH as much as possible.

In a possible implementation of the first aspect or the second aspect, an SSB having the QCL relationship with the DMRS antenna port of the PDSCH that carries the first information or the DMRS antenna port of the PDCCH for scheduling the first information may be determined based on the first information and a BWP that carries the first information.

For example, the first information is a system message or a paging message. In this case, if the BWP that carries the first information is the first BWP, the DMRS antenna port of the PDSCH that carries the first information has the QCL relationship with the first SSB, and/or the DMRS antenna port of the PDCCH for scheduling the first information has the QCL relationship with the first SSB. If the BWP that carries the first information is the second BWP, the DMRS antenna port of the PDSCH that carries the first information has the QCL relationship with the second SSB, and/or the DMRS antenna port of the PDCCH for scheduling the first information has the QCL relationship with the second SSB.

For another example, the first information is a random access response message or a contention resolution message, and the first BWP and the second BWP respectively correspond to different random access channel occasions (random access channel occasions, ROs). In this case, if the BWP that carries the first information is the first BWP, the DMRS antenna port of the PDSCH that carries the first information has the QCL relationship with the first SSB, and/or the DMRS antenna port of the PDCCH for scheduling the first information has the QCL relationship with the first SSB. If the BWP that carries the first information is the second BWP, the DMRS antenna port of the PDSCH that carries the first information has the QCL relationship with the second SSB, and/or the DMRS antenna port of the PDCCH for scheduling the first information has the QCL relationship with the second SSB.

For still another example, the first information is a random access response message or a contention resolution message, but the first BWP and the second BWP share a first RO. In this case, if the network device configures a mapping relationship between the first SSB and the first RO, the DMRS antenna port of the PDSCH that carries the first information has the QCL relationship with the first SSB, and/or the DMRS antenna port of the PDCCH for scheduling the first information has the QCL relationship with the first SSB. If the network device configures the mapping relationship between the first SSB and the first RO and a mapping relationship between the second SSB and the first RO, and the BWP that carries the first information is the first BWP, the DMRS antenna port of the PDSCH that carries the first information has the QCL relationship with the first SSB, and/or the DMRS antenna port of the PDCCH for scheduling the first information has the QCL relationship with the first SSB. If the network device configures the mapping relationship between the first SSB and the first RO and the mapping relationship between the second SSB and the first RO, and the BWP that carries the first information is the second BWP, the DMRS antenna port of the PDSCH that carries the first information has the QCL relationship with the second SSB, and/or the DMRS antenna port of the PDCCH for scheduling the first information has the QCL relationship with the second SSB.

According to a third aspect, a communication apparatus is provided. The communication apparatus has a function of implementing behavior in the method instance of the first aspect. For beneficial effects, refer to the descriptions of the first aspect. Details are not described herein again. The function may be implemented by hardware, or may be implemented by the hardware by executing corresponding software. The hardware or the software includes one or more modules corresponding to the foregoing function. In a possible design, the communication apparatus includes a processing module and/or a transceiver module. These modules may perform corresponding functions in the method example of the first aspect. For details, refer to detailed descriptions in the method example. Details are not described herein again.

According to a fourth aspect, a communication apparatus is provided. The communication apparatus has a function of implementing behavior in the method instance of the second aspect. For beneficial effects, refer to the descriptions of the second aspect. Details are not described herein again. The function may be implemented by hardware, or may be implemented by the hardware by executing corresponding software. The hardware or the software includes one or more modules corresponding to the foregoing function. In a possible design, the communication apparatus includes a processing module and/or a transceiver module. These modules may perform corresponding functions in the method example of the second aspect. For details, refer to detailed descriptions in the method example. Details are not described herein again.

According to a fifth aspect, a communication apparatus is provided. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a sixth aspect, a communication apparatus is provided. The communication apparatus may be the network device in the foregoing method embodiments, or may be a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a seventh aspect, a computer program product is provided. The computer program product includes computer program code. When the computer program code is run, the method performed by the terminal device in the foregoing aspects is performed.

According to an eighth aspect, a computer program product is provided. The computer program product includes computer program code. When the computer program code is run, the method performed by the network device in the foregoing aspects is performed.

According to a ninth aspect, this application provides a chip system. The chip system includes a processor, configured to implement a function of the terminal device in the methods in the foregoing aspects. In a possible design, the chip system further includes a memory, configured to store program instructions and/or data. The chip system may include a chip, or may include the chip and another discrete component.

According to a tenth aspect, this application provides a chip system. The chip system includes a processor, configured to implement a function of the network device in the methods in the foregoing aspects. In a possible design, the chip system further includes a memory, configured to store program instructions and/or data. The chip system may include a chip, or may include the chip and another discrete component.

According to an eleventh aspect, this application provides a computer-readable storage medium. The computer-readable storage medium stores a computer program. When the computer program is run, the method performed by the terminal device in the foregoing aspects is implemented.

According to a twelfth aspect, this application provides a computer-readable storage medium. The computer-readable storage medium stores a computer program. When the computer program is run, the method performed by the network device in the foregoing aspects is implemented.

### BRIEF DESCRIPTION OF DRAWINGS

FIG. 1 is a schematic diagram of a network architecture to which an embodiment of this application is applicable;
FIG. 2A is a schematic diagram of a network architecture of a communication system to which an embodiment of this application is applicable;
FIG. 2B is a schematic diagram of another network architecture of a communication system to which an embodiment of this application is applicable;
FIG. 2C is a schematic diagram of still another network architecture of a communication system to which an embodiment of this application is applicable;
FIG. 3 is a schematic diagram of initial downlink BWPs of a first-type terminal device and a second-type terminal device;
FIG. 4 is a schematic diagram of transmit power of a first SSB and a second SSB in two time units according to an embodiment of this application;
FIG. 5 is another schematic diagram of transmit power of a first SSB and a second SSB in two time units according to an embodiment of this application;
FIG. 6 is a schematic diagram of time domain resources respectively occupied by a first SSB and a second SSB according to an embodiment of this application;
FIG. 7 is a schematic flowchart of an SSB sending and receiving method according to an embodiment of this application;
FIG. 8 is a schematic diagram of a structure of a communication apparatus according to an embodiment of this application;
FIG. 9 is a schematic diagram of a structure of a terminal device according to an embodiment of this application; and
FIG. 10 is a schematic diagram of a structure of a network device according to an embodiment of this application.

### DESCRIPTION OF EMBODIMENTS

First, some technical terms used in embodiments of this application are explained and described.
(1) A network device is an access device used by a terminal device to access a mobile communication system in a wireless manner, for example, including a radio access network (radio access network, RAN) device, for example, a base station (for example, an access point). The network device may also refer to a device that communicates with a terminal over an air interface, for example, another possible terminal apparatus. For another example, a network device in a vehicle-to-everything (vehicle-to-everything, V2X) technology is a road side unit (road side unit, RSU). The base station may be configured to perform mutual conversion between a received over-the-air frame and an internet protocol (internet protocol, IP) packet, and serve as a router between the terminal and a remaining part of the radio access network. The remaining part of the radio access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (evolved NodeB) in a long term evolution (long term evolution, LTE) system or long term evolution-advanced (long term evolution-advanced, LTE-A), which may also be referred to as an eNB or eNodeB for short; may include a next generation NodeB (next generation NodeB, gNB) in a new radio (new radio, NR) system; or may include an access node in a wireless fidelity (wireless fidelity, Wi-Fi) system. Alternatively, the network device may be a relay station, a vehicle-mounted device, a future evolved public land mobile network (Public Land Mobile Network, PLMN) device, a device in a device-to-device (device-to-device, D2D) network, a device in a machine-to-machine (machine-to-machine, M2M) network, a device in an IoT network, or the like. A specific technology and a specific device form used by a wireless network device are not limited in embodiments of this application. For example, the network device may correspond to an eNB in a 4th generation (4th generation, 4G) mobile communication technology system, and correspond to a gNB in a 5G system.

The network device may further include a core network device. The core network device includes, for example, an access and mobility management function (access and mobility management function, AMF), a user plane function (user plane function, UPF), or the like. An access network device is mainly used in embodiments of this application. Therefore, in the following descriptions, unless otherwise specified, the network device refers to the access network device.

In embodiments of this application, an apparatus configured to implement a function of the network device may be a network device, or may be an apparatus, for example, a circuit system, that can support the network device in implementing the function. The apparatus may be mounted in the network device. In the technical solutions provided in embodiments of this application, an example in which the apparatus configured to implement the function of the network device may be the network device is used to describe the technical solutions provided in embodiments of this application.

(2) A terminal device is a device having wireless receiving and sending functions, and may send a signal to the network device or receive a signal from the network device. The terminal device may be referred to as a user equipment (user equipment, UE), and may also be referred to as a terminal, an access station, a UE station, a remote station, a wireless communication device, a user apparatus, or the like. The terminal device is configured to connect a person, an object, a machine, and the like, and may be widely used in various scenarios, for example, including but not limited to the following scenarios: cellular communication, D2D, V2X, machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, smart wearables, smart transportation, a smart city (smart city), an unmanned aerial vehicle, and a robot. In other words, the terminal device in embodiments of this application may be a device used in one or more of the foregoing scenarios. By way of example but not limitation, in embodiments of this application, the terminal device may alternatively be a wearable device, for example, glasses, gloves, a watch, clothing, and shoes. The terminal device may further include a relay (relay). For example, the terminal device may be customer terminal equipment (customer premise equipment, CPE). The CPE may receive a signal from the network device, and forward the signal to another terminal device. Alternatively, it may be understood that any device that can perform data communication with the base station may be considered as a terminal device. If the terminal devices described above are located on a vehicle (for example, placed in the vehicle or mounted in the vehicle), all the terminal devices may be considered as vehicle-mounted terminal devices. The vehicle-mounted terminal device is also referred to as, for example, an on board unit (on board unit, OBU).

In addition, in embodiments of this application, the terminal device may be an apparatus configured to implement a function of the terminal, or may be an apparatus that can support the terminal device in implementing the function, for example, a chip system. The apparatus may be mounted in the terminal device. For example, the terminal device may alternatively be a vehicle detector. In embodiments of this application, the chip system may include a chip, or may include the chip and another discrete component. In the technical solutions provided in embodiments of this application, an example in which the apparatus configured to implement the function of the terminal is the terminal device is used to describe the technical solutions provided in embodiments of this application.

A plurality of different types of terminal devices are used in embodiments of this application. The plurality of different types of terminal devices may be classified based on capabilities of the terminal devices or service types supported by the terminal devices. Terminal devices having different capabilities may support different service types. For example, for an application scenario of a 5G communication system, the International Telecommunication Union (International Telecommunication Union, ITU) defines three types of application scenarios for 5G and future mobile communication systems. The three types of application scenarios are: eMBB, URLLC, and mMTC. Typical eMBB services include an ultra high-definition video, augmented reality AR, virtual reality VR, and the like. These services are mainly characterized by a large amount of transmitted data and a high transmission rate. Typical URLLC services include wireless control in an industrial manufacturing or production process, motion control and remote repair of a self-driving car and an unmanned aerial vehicle, a tactile interaction application such as remote surgery, and the like. These services are mainly characterized by ultra-high reliability, a low latency, a small amount of transmitted data, and burstiness. Typical mMTC services include an IWSN service, a video surveillance service, a wearables service, and the like. These services are mainly characterized by a large quantity of network-connected devices, a small amount of transmitted data, and insensitivity of data to a transmission latency. These mMTC terminals need to satisfy requirements of low costs and extremely long standby duration.

A service that does not require a high data transmission rate may be implemented by using a machine-type terminal device that has a weak capability and that is implemented with low costs. For example, the IWSN service is met when a data transmission rate carried by a sensor in an IWSN is less than or equal to 2 Mbps, and a data transmission rate carried by an economical video surveillance camera is usually 2 Mbps to 4 Mbps. A downlink peak rate of a terminal device in the wearables service, for example, a smart watch, does not exceed 150 Mbps, and an uplink peak rate of the terminal device does not exceed 50 Mbps, which are far lower than peak rates of an NR common (legacy) terminal device (for example, an NR eMBB terminal device). Compared with the NR legacy terminal device, the machine-type terminal device can reduce an implementation specification, to reduce implementation costs.

Based on the service types supported by the terminal devices, the terminal devices may be classified into a plurality of types of terminals. For example, a terminal device that supports a service requiring a high data transmission rate may be referred to as a first-type terminal device, and a terminal device that supports a service requiring a low data transmission rate may be referred to as a second-type terminal device. Compared with the first-type terminal device, the second-type terminal device may be considered as a terminal device with lower complexity or a reduced capability. For example, the second-type terminal device may be less complex than the first-type terminal device in terms of supported bandwidth, power consumption, and antenna quantity. For example, narrower bandwidth, lower power consumption, and fewer antennas are supported. In embodiments of this application, the first-type terminal device may also be referred to as a normal terminal device or a terminal device having a legacy capability or/normal capability/high capability, and may also be referred to as a legacy (legacy) terminal device. The second-type terminal device may be referred to as a machine-type terminal device, a terminal device having low complexity or a reduced capability (REDuced CAPability, REDCAP), a terminal device having a reduced capability, or an (NR light, NRL) terminal device, namely, a lightweight terminal device. The terminal device in embodiments of this application may be the first-type terminal device, or may be the second-type terminal device.

It may be considered that there are two types of terminal devices in embodiments of this application. For example, the second-type terminal device is a low-complexity terminal device, and the first-type terminal device may be a terminal device other than the low-complexity terminal device. A difference between the first-type terminal device and the second-type terminal device includes at least one of the following items.
1. Bandwidth capabilities are different. Maximum bandwidth supported by the first-type terminal device may be greater than maximum bandwidth supported by the second-type terminal device. For example, the first-type terminal device may support communication with the network device by using a maximum of 100 MHz frequency domain resource on one carrier, and the second-type terminal device may support communication with the network device by using a maximum of 20 MHz or less frequency domain resource on one carrier. For example, the second-type terminal device may support communication with the network device by using a maximum of 10 MHz or 5 MHz frequency domain resource on one carrier.
2. Quantities of transmit and receive antennas are different. An antenna configuration of the first-type terminal device may be greater than an antenna configuration of the second-type terminal device. For example, a minimum antenna configuration supported by the first-type terminal device may be greater than a maximum antenna configuration supported by the second-type terminal device. For example, the first-type terminal device may support 4R2T (four receive antennas and two transmit antennas). The second-type terminal device may support 2R1T (two receive antennas and one transmit antenna) or 1R1T (one receive antenna and one transmit antenna). It may be understood that, when data transmission rates are the same, because the quantity of transmit and receive antennas of the second-type terminal device is less than the quantity of transmit and receive antennas of the first-type terminal device, maximum coverage that can be implemented by data transmission between the second-type terminal device and the base station is less than maximum coverage that can be implemented by data transmission between the first-type terminal device and the base station.
3. Maximum uplink transmit power is different. The maximum uplink transmit power of the first-type terminal device is greater than the maximum uplink transmit power of the second-type terminal device.
4. Protocol versions are different. The first-type terminal device may be a terminal device in the NR Release 15 (release-15, Rel-15) or the NR Release 16 (release-16, Rel-16). The second-type terminal device may be considered as a terminal device in the NR Release 17 (release-17, Rel-17) or a version later than the NR Rel-17.
5. Carrier aggregation (carrier aggregation, CA) capabilities are different. For example, the first-type terminal device may support carrier aggregation, but the second-type terminal device does not support the carrier aggregation. For another example, both the second-type terminal device and the first-type terminal device support the carrier aggregation, but a maximum quantity of cells that are used for the carrier aggregation and that are supported by the first-type terminal device is greater than a maximum quantity of cells that are used for the carrier aggregation and that are supported by the second-type terminal device.
6. Frequency division duplex (frequency division duplex, FDD) capabilities are different. For example, the first-type terminal device supports full-duplex FDD, and the second-type terminal device supports only half-duplex FDD.
7. Data processing time capabilities are different. For example, a minimum latency between receiving of downlink data by the first-type terminal device and sending of a feedback for the downlink data is less than a minimum latency between receiving of downlink data by the second-type terminal device and sending of a feedback for the downlink data, and/or a minimum latency between sending of uplink data by the first-type terminal device and receiving of a feedback for the uplink data is less than a minimum latency between sending of uplink data by the second-type terminal device and receiving of a feedback for the uplink data.
8. Processing capabilities (abilities/capabilities) are different. For example, a baseband processing capability of the first-type terminal device is higher than a baseband processing capability of the second-type terminal device. The baseband processing capability may include at least one of the following: a maximum quantity of MIMO layers supported when the terminal device performs data transmission, a quantity of HARQ processes supported by the terminal device, and a maximum transport block size (transmission block size, TBS) supported by the terminal device.
9. Uplink and/or downlink transmission peak rates are different. The peak transmission rate refers to a maximum data transmission rate that can be achieved by the terminal device in a unit time (for example, per second). The uplink peak rate supported by the first-type terminal device may be higher than the uplink peak rate supported by the second-type terminal device, and/or the downlink peak rate supported by the first-type terminal device may be lower than the downlink peak rate supported by a second terminal device. For example, for the first-type terminal device, the uplink peak rate is greater than or equal to 50 Mbps, and the downlink peak rate is greater than or equal to 150 Mbps; and for the second-type terminal device, the uplink peak rate is less than or equal to 50 Mbps, and the downlink peak rate is less than or equal to 150 Mbps. For another example, the uplink peak rate or the downlink peak rate of the first-type terminal device is at a 100-Mbps level, and the uplink peak rate or the downlink peak rate of the second-type terminal device is at a Gbps level.
10. Buffer (buffer) sizes are different. The buffer (buffer) may be understood as a total size of a layer 2 (Layer 2, L2) buffer, and is defined as a sum of a quantity of bytes buffered by the terminal device for all radio bearers in a radio link control (radio link control, RLC) send window, receive window, and a reordering window and a quantity of bytes buffered in a packet data convergence protocol (Packet Data Convergence Protocol, PDCP) reordering window. Alternatively, the buffer (buffer) may also be understood as a total quantity of soft channel bits that can be used for hybrid automatic repeat request (Hybrid Automatic Repeat reQuest, HARQ) processing.

Certainly, the foregoing descriptions are merely examples, and there may be another difference between the first-type terminal device and the second-type terminal device. In addition to the foregoing differences, there may also be other differences. For example, the first-type terminal device does not support coverage enhancement, and the second-type terminal device supports the coverage enhancement. For another example, the first-type terminal device does not support small packet transmission, and the second-type terminal device supports the small packet transmission. Examples are not described herein one by one.

(3) The BWP refers to a segment of contiguous frequency resources in frequency domain. The BWP may be classified into an uplink BWP and a downlink BWP. The uplink BWP is used by the terminal device to perform uplink sending, and bandwidth of the uplink BWP may exceed a sending bandwidth capability of the terminal device. The downlink BWP is used by the terminal device to perform downlink receiving, and bandwidth of the downlink BWP may exceed a receiving bandwidth capability of the terminal device. In embodiments of this application, a bandwidth capability of the terminal device may be channel bandwidth supported by the terminal device, maximum channel bandwidth supported by the terminal device, a quantity of resource blocks (resource blocks, RBs) supported by the terminal device, or a maximum quantity of resource blocks supported by the terminal device. It may be understood that bandwidth of a BWP of the first-type terminal device may exceed a bandwidth capability of the second-type terminal device, that is, exceeds maximum bandwidth supported by the second-type terminal device.

One terminal device may be configured with one or more BWPs. However, in a same period of time, the terminal device can operate in only one of the BWPs, and the BWP may also be considered as a BWP activated by the terminal device. When the terminal device is configured with a plurality of BWPs, the terminal device may switch between the plurality of BWPs. Compared with the BWP activated by the terminal device, at an initial access phase, a BWP configured by the network device for the terminal device may be referred to as an initial BWP, for example, an initial downlink BWP or an initial uplink BWP.

(4) Frequency tuning means that when the network device communicates with the terminal device, a radio frequency component in the network device and a radio frequency component in the terminal device operate within a specific frequency range. Center frequencies at which the radio frequency components operate may determine frequency resource positions at which the network device and the terminal device operate. If an operating frequency range of the radio frequency component changes, for example, the terminal device switches from one BWP to another BWP, a frequency domain position and/or bandwidth for operation of the radio frequency component change/changes, the radio frequency component needs to perform frequency tuning, to change the center frequency, so as to change a position for receiving/sending a frequency resource. The frequency tuning needs to occupy a period of tuning time. Within the tuning time, the network device and the terminal device cannot send or receive information.

(5) A synchronization signal is used for 2 and frequency synchronization between the terminal device and the network device when the terminal device accesses the network. In an NR system, a synchronization signal is transmitted by using an SSB as a basic unit. The SSB includes a primary synchronization signal (primary synchronization signal, PSS) and a secondary synchronization signal (secondary synchronization signal, SSS). The terminal device may perform time and frequency synchronization with the network device by using the PSS and SSS. Optionally, the SSB may further include a PBCH. The PBCH mainly carries broadcast information, including a master information block (master information block, MIB) from a higher layer and timing-related information from a physical layer. The SSB may further be used for channel quality measurement, RRM measurement, RLM measurement, or the like.

In NR, a multi-beam operation is introduced. For example, the NR system supports the network device in sending SSBs on a plurality of beams. Different frequency bands support different quantities of beams. For example, within a range of 3 GHz to 6 GHz, the network device may support a maximum of eight SSB beams. That is, the network device may send eight SSBs to the terminal device in a same period of time. In an existing technology, transmission of the plurality of SSBs is completed in one half-frame, and periodic transmission may be performed in the half-frame for transmission of the SSB. In other words, the network device periodically sends the SSB. A set including all SSBs sent within one periodicity may be referred to as a synchronization signal burst (synchronization signal burst, SS burst). A periodicity of the SS burst may be set to 5 ms (milliseconds), 10 ms, 20 ms, 40 ms, 80 ms, 160 ms, or the like. 20 ms is a default periodicity, that is, a periodicity assumed when the terminal device performs initial cell search.

(6) Quasi co-location (quasi co-location, QCL) may be understood as that large-scale parameters of a channel through which a symbol on an antenna port passes may be inferred from a channel through which a symbol on another antenna port passes. The large-scale parameters may include a latency spread, an average latency, a Doppler spread, a Doppler shift, an average gain, a spatial reception parameter, and the like. For example, if many larger-size parameters of a channel for transmission of a symbol on another antenna port can be inferred from a channel for transmission of a symbol on one antenna port, the two antenna ports have a QCL relationship. This may also be referred to as that the two antenna ports are quasi co-located. For example, a DMRS antenna port of a PDSCH has the QCL relationship with an antenna port of another signal. For another example, a DMRS antenna port of a PDCCH has the QCL relationship with an antenna port of another signal. In this specification, that a DMRS antenna port of a PDSCH has the QCL relationship with an antenna port of another signal is also referred to as that the DMRS antenna port of the PDSCH has the QCL relationship with the another signal, or that the DMRS has the QCL relationship with the another signal. Similarly, that a DMRS antenna port of a PDCCH has the QCL relationship with an antenna port of another signal is also referred to as that the DMRS antenna port of the PDCCH has the QCL relationship with the another signal. In other words, in this specification, that an antenna port has the QCL relationship with a signal means that the antenna port has the QCL relationship with an antenna port of the signal.

(7) "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one (piece) of a, b, or c may indicate: a; b; c; a and b; a and c; b and c; or a, b, and c, where a, b, and c may be singular or plural.

In addition, unless otherwise specified, ordinal numbers such as "first" and "second" mentioned in embodiments of this application are used to distinguish between a plurality of objects, and are not used to limit a sequence, a time sequence, a priority, or an importance degree of the plurality of obj ects. For example, the first BWP and the second BWP are merely used to distinguish between different BWPs, and do not indicate different precedence, different importance, or the like of the two BWPs. In embodiments of this application, unless otherwise specified, "if" and "assuming" may be replaced with each other, "when" and "in a case of" may be replaced with each other, and "RRM measurement" and "RLM measurement" may be replaced with each other.

Some technical terms used in embodiments of this application are described above, and a network architecture used in embodiments of this application is described below.

The technical solutions provided in embodiments of this application may be applied to a 5th generation (5th generation, 5G) mobile communication system, for example, an NR system, applied to a long term evolution (long term evolution, LTE) system, or applied to a next-generation mobile communication system or another similar communication system. This is not specifically limited.

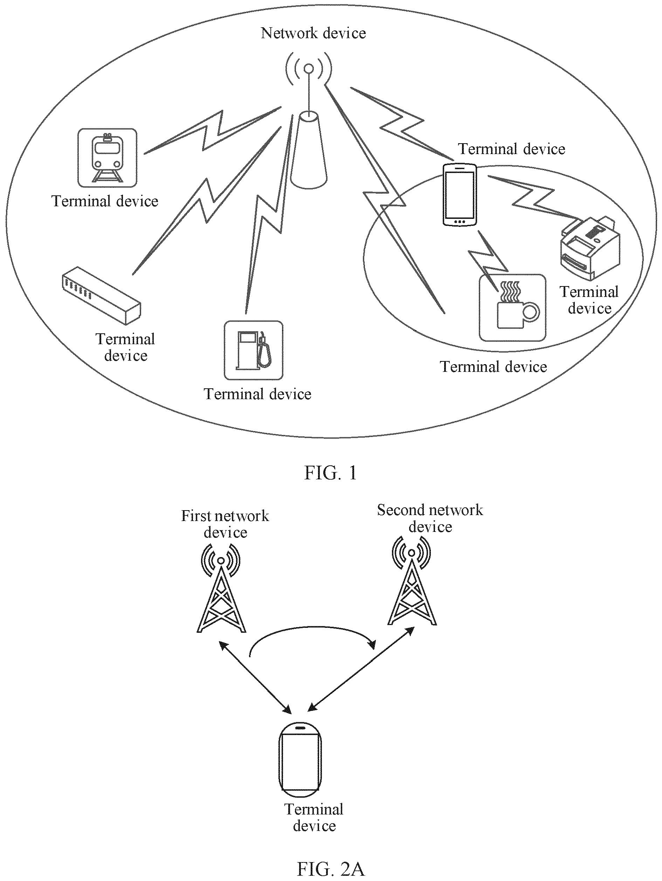

FIG. 1 shows a network architecture used in an embodiment of this application. FIG. 1 includes a network device and six terminal devices. The six terminal devices may be a cellular phone, a smartphone, a portable computer, a handheld communication device, a handheld computing device, a satellite radio apparatus, a global positioning system, a PDA, and/or any other appropriate device used for communication on a wireless communication system, and all may be connected to the network device. The six terminal devices all can communicate with the network device. Certainly, a quantity of the terminal devices in FIG. 1 is merely an example. Alternatively, there may be fewer or more terminal devices. It should be noted that FIG. 1 is merely an example, and types of devices included in the communication system are not limited in this embodiment of this application. For example, the communication system may further include another network device, for example, a wireless relay device or a wireless backhaul device.

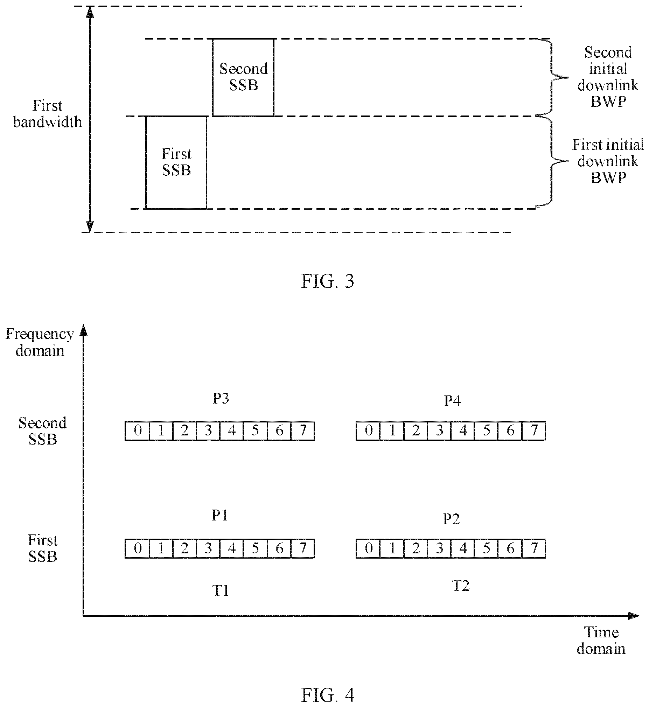

FIG. 2A shows a communication network architecture in a communication system provided in this application. All subsequent embodiments shown in FIG. 4 are applicable to the architecture. A first network device is a source network device (or referred to as a working network device or a serving network device) of a terminal device (where a UE is used as an example subsequently for description). A second network device is a target network device (or referred to as a standby network device) of the UE, that is, a network device that serves the UE after switching. It should be noted that, in this application, "fault" may be understood as that the network device is faulty, and/or the network device cannot serve one or more UEs due to other reasons, which is referred to as a fault for short. The "switching" in this application means that the network device serving the UE switches, and is not limited to "cell switching". For ease of description, an example in which the network device is a base station is used for description. The "switching" may refer to switching caused by a change of a base station serving the UE. For example, when a source base station of the UE is faulty, a standby base station serves the UE. For another example, in a process in which the UE switches from a source base station to another base station for communication, a switched-to target base station serves the UE. A cell accessed by the UE before and after the switching may change or remain unchanged. It may be understood that the standby network device is a relative concept. For example, for a UE, a base station 2 is a standby network device of a base station 1, but for another UE, the base station 1 is a standby network device of the base station 2.

The first network device and the second network device may be two different devices. For example, the first network device and the second network device are two different base stations. Optionally, the first network device and the second network device may alternatively be two sets of functional modules in a same device. The functional module may be a hardware module, a software module, or the hardware module and the software module. For example, the first network device and the second network device are located in a same base station, and are two different functional modules in the base station. In an implementation, the first network device and the second network device are not transparent to the UE. When interacting with a corresponding network device, the UE can learn of the network device with which the UE interacts. In another implementation, the first network device and the second network device are transparent to the UE. The UE can communicate with a network device, but does not learn of the network device that is in the two network devices and with which the UE interacts. In other words, the UE may consider that there is only one network device. In the following descriptions, the first network device, the second network device, and the terminal device (where the UE is used as an example) may be respectively the first network device, the second network device, and the UE in the network architecture shown in FIG. 2A. In the accompanying drawings corresponding to embodiments of this application, steps indicated by using dashed lines are optional steps. Details are not described in the following descriptions.

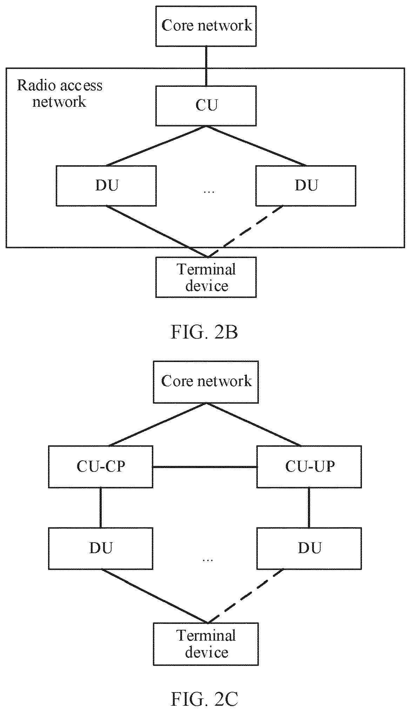

FIG. 2B shows another communication network architecture in a communication system provided in this application. As shown in FIG. 2B, the communication system includes a core network (new core, CN) and a radio access network (radio access network, RAN). A network device (for example, a base station) in the RAN includes a baseband apparatus and a radio frequency apparatus. The baseband apparatus may be implemented by one or more nodes. The radio frequency apparatus may be independently implemented remotely from the baseband apparatus, may be integrated into the baseband apparatus, or may be partly implemented remotely from and partly integrated into the baseband apparatus. The network device in the RAN may include a central unit (central unit, CU) and a distributed unit (distributed unit, DU), and a plurality of DUs may be centrally controlled by one CU. The CU and the DU may be divided based on protocol layer functions of a radio network. For example, functions of a PDCP layer and a protocol layer above the PDCP layer are configured in the CU, and functions of a protocol layer below the PDCP layer, such as an RLC layer and a MAC layer, are configured in the DU. It should be noted that such protocol layer division is merely an example, and may alternatively be another protocol layer division. The radio frequency apparatus may not be placed in the DU and placed remotely from the DU, may be integrated into the DU, or partially disposed remotely and partially integrated into the DU. This is not limited in this application.

FIG. 2C shows another communication network architecture in a communication system provided in this application. Compared with the architecture shown in FIG. 2B, a control plane (CP) and a user plane (UP) of the CU may be further separated into different entities for implementation, and the different entities are a control plane CU entity (CU-CP entity) and a user plane CU entity (CU-UP entity). In this network architecture, signaling generated by the CU may be sent to a UE via the DU, or signaling generated by the UE may be sent to the CU via the DU. The DU may transparently transmit the signaling to the UE or the CU by directly encapsulating the signaling at a protocol layer without parsing the signaling. In this network architecture, the CU is classified as a network device on a RAN side. In addition, the CU may alternatively be classified as a network device on a CN side. This is not limited in this application.

The foregoing describes some technical terms used in embodiments of this application and network architectures to which embodiments of this application are applicable. The following describes technical features in embodiments of this application.

A plurality of types of terminal devices having different maximum operating bandwidth, for example, the foregoing first-type terminal device (for example, the legacy terminal device) and the foregoing second-type terminal device (for example, the REDCAP terminal device), are used in an NR system. In other words, the first-type terminal device and the second-type terminal device may coexist in a same network system. A network device may configure an initial downlink BWP for each of the first-type terminal device and the second-type terminal device. For example, FIG. 3 is a schematic diagram of the initial downlink BWPs of the first-type terminal device and the second-type terminal device. The network device configures a first BWP in first bandwidth for the first-type terminal device, and configures a second BWP in the first bandwidth for the second-type terminal device. Bandwidth of the second BWP may be less than or equal to bandwidth of the first BWP. The first-type terminal device may receive a message (also referred to as information or a signal) from the network device in the first BWP. Compared with the first-type terminal device, the second-type terminal device has a reduced bandwidth capability. The second-type terminal device may receive, in the second BWP, information sent by the network device in the second BWP. Certainly, the second-type terminal device may further receive the message from the network device in the first BWP.

Currently, the network device sends an SSB in the first BWP. The second-type terminal device needs to switch from the second BWP to the first BWP to receive the SSB. Because the second-type terminal device performs switching between the BWPs, a parameter, for example, bandwidth, of a radio frequency chain of the second-type terminal device needs to be adaptively adjusted, causing additional power consumption and processing complexity. Therefore, it is proposed that the network device may also broadcast an SSB in the second BWP. Correspondingly, the second-type terminal device may receive the SSB in the second BWP, to reduce a quantity of BWP switching times and reduce power consumption. As shown in FIG. 3, the network device sends a first SSB in the first BWP, and sends a second SSB in the second BWP.

That the network device sends a second SSB in the second BWP is equivalent to that more SSBs are additionally introduced within a bandwidth range of the first BWP and the second BWP. However, a PSD of the SSB is usually higher than a PSD of another channel (or signal). If the additional SSB is introduced to the second BWP, a PSD of another channel (or signal) on a time-frequency resource in which the second BWP is located decreases. As a result, transmission performance of the another channel (or signal) deteriorates. For example, if the additional SSB is introduced to the second BWP, transmission performance of another downlink physical channel or reference signal, for example, a PDSCH, a PDCCH, or a CSI-RS, on the time-frequency resource in which the second BWP is located deteriorates.

In view of this, an embodiment of this application provides an SSB transmission scheme. In this scheme, a network device may independently configure an initial downlink BWP for each of a first-type terminal device and a second-type terminal device, and send an SSB in each of the independently configured initial downlink BWPs. For example, the network device configures a first BWP for the first-type terminal device, and configures a second BWP for the second-type terminal device. In addition, the network device may send a first SSB in the first BWP, and send a second SSB in the second BWP. The first-type terminal device may receive the first SSB in the first BWP. The second-type terminal device may receive the second SSB in the second BWP without switching from the second BWP to the first BWP, to reduce a quantity of BWP switching times and a quantity of frequency tuning times of the second-type terminal device. This reduces power consumption of the second-type terminal device.

In a possible implementation, the network device may configure transmit power of the second SSB to be the same as transmit power of the first SSB, or may configure the transmit power of the second SSB to be different from the transmit power of the first SSB. For example, the network device may configure the transmit power of the second SSB to be lower than the transmit power of the first SSB. Because the transmit power of the second SSB is lower than the transmit power of the first SSB, impact of additional introduction of the second SSB on transmission performance of another channel or signal within a carrier bandwidth range can be reduced as much as possible. It may also be considered that, for the first SSB, a current related configuration of the first SSB, for example, a configuration of a time-frequency resource of the first SSB or a configuration of the transmit power of the first SSB, may still be used. For the second SSB, related information, for example, a time-frequency resource or the transmit power, of the second SSB, may be reconfigured.

A specific implementation of the transmit power of the SSB is not limited in this embodiment of this application. The transmit power of the SSB may be transmit power of one or more of an SSS, a PSS, and a PBCH that are included in the SSB, and a DMRS used for the PBCH. For example, the transmit power of the SSB may be the transmit power of the SSS in the SSB, for example, may be average power on each resource element (resource element, RE) carrying the SSS. For another example, the transmit power of the SSB may be the transmit power of the PSS in the SSB, for example, may be average power of each RE carrying the PSS. Examples are not listed herein one by one. That the transmit power of the first SSB is different from the transmit power of the second SSB may be that transmit power of one or more of an SSS, a PSS, and a PBCH that are included in each of the first SSB and the second SSB, and a DMRS used for the PBCH is different. For example, that the transmit power of the first SSB is different from the transmit power of the second SSB may be that the transmit power of the SSS included in the first SSB is different from the transmit power of the SSB included in the second SSB. In this case, the transmit power of the PSSs or the PBCHs that are included in the first SSB and the second SSB, or the DMRSs used for the PBCHs may be the same or may be different. For another example, that the transmit power of the first SSB is different from the transmit power of the second SSB may be that the transmit power of the SSS included in the first SSB is different from the transmit power of the SSB included in the second SSB, and the transmit power of the PSSs or the PBCHs that are included in the first SSB and the second SSB, or the DMRSs used for the PBCHs is different.

It is considered that the terminal device may have different service requirements in different periods of time. For example, a service transmission rate requirement of the terminal device is high in a first time unit, and a service transmission rate requirement of the terminal device is low in a second time unit. Therefore, in this embodiment of this application, the transmit power of the first SSB is allowed to be different in different time units. For example, transmit power of the first SSB in the first time unit is first transmit power, and transmit power of the first SSB in the second time unit is second transmit power. The first transmit power is different from the second transmit power. In this way, the network device may adjust the transmit power of the first SSB based on a service requirement of the first-type terminal device, so that the transmit power of the first SSB adapts to an actual service requirement of the first-type terminal device, to increase a service transmission rate of the first-type terminal device. Similarly, in this embodiment of this application, the transmit power of the second SSB is also allowed to be different in different time units. In this way, the network device may adjust the transmit power of the second SSB based on a service requirement of the second-type terminal device, so that the transmit power of the second SSB adapts to an actual service requirement of the second-type terminal device, to increase a service transmission rate of the second-type terminal device. It may be understood that, in this embodiment of this application, the transmit power of the first SSB is allowed to be different from the transmit power of the second SSB in a same time unit. For example, transmit power of the second SSB is lower than transmit power of the first SSB in a time unit, to minimize impact on transmission performance of another channel or signal in the time unit. The network device may flexibly adjust the transmit power of the first SSB and the transmit power of the second SSB based on an actual requirement, to improve transmission performance of the terminal device as much as possible, and reduce the impact on the transmission performance of the another channel or signal as much as possible.

For example, FIG. 4 shows transmit power of the first SSB and the second SSB in two time units. In FIG. 4, for example, the two time units are T1 and T2. The transmit power of the first SSB in T1 is P1, and the transmit power of the first SSB in T2 is P2. The transmit power of the second SSB in T1 is P3, and the transmit power of the second SSB in T2 is P4. In FIG. 4, P1 may be different from P3, and P2 may be different from P4. In other words, the transmit power of the first SSB is different from that of the second SSB in the same time unit. The network device may adjust the transmit power of the first SSB based on the service requirement of the first-type terminal device. For example, the first-type terminal device requires, in T2, a service data transmission rate higher than that in T1. In this case, the network device may increase the transmit power of the first SSB, in other words, P2 is greater than P1. For another example, the first-type terminal device requires, in T2, a service data transmission rate lower than that in T1. In this case, the network device may reduce the transmit power of the second SSB, in other words, P4 is less than P3.

It may be understood that, the network device adjusts both the transmit power of the first SSB and the transmit power of the second SSB. It is inevitable that the transmit power of the first SSB is always higher than the transmit power of the second SSB in a same time unit. As a result, transmission performance of a terminal device receiving the second SSB, namely, the second-type terminal device, is poor. Therefore, in this embodiment of this application, it may be specified or configured that a sum of the transmit power of the first SSB and the transmit power of the second SSB remains unchanged. In other words, total transmit power of the first SSB and the second SSB remains unchanged. For example, a sum of the transmit power of the first SSB and the transmit power of the second SSB in the first time unit is P5, and a sum of the transmit power of the first SSB and the transmit power of the second SSB in the second time unit is also P5. In this way, the network device may adjust the transmit power of the first SSB or the transmit power of the second SSB based on that the total transmit power of the first SSB and the second SSB remains unchanged, to avoid, as much as possible, a case in which transmit power of one of the first SSB and the second SSB is always higher than transmit power of the other SSB, so as to improve transmission performance of a terminal device that receives an SSB with the lower transmit power as much as possible. In addition, this also avoids a case in which transmit power of another channel or signal is greatly reduced because both the power of the first SSB and the power of the second SSB are high, and transmission performance of the another channel or signal deteriorates due to introduction of the second SSB.

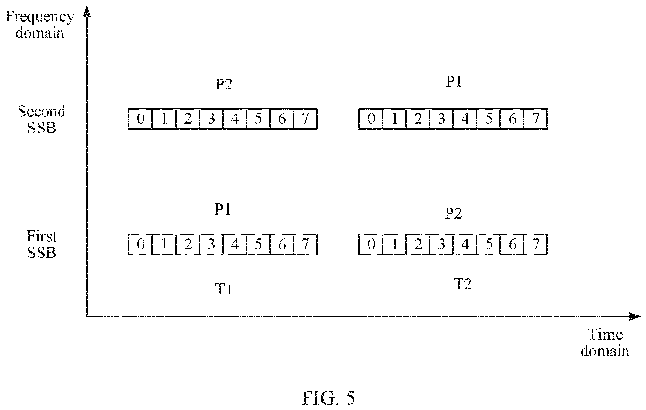

For example, FIG. 5 shows transmit power of the first SSB and the second SSB in two time units. A difference between FIG. 5 and FIG. 4 lies in that the transmit power of the second SSB in T1 is P2, and the transmit power of the second SSB in T2 is P1. To be specific, the sum of the transmit power of the first SSB and the transmit power of the second SSB in T1 is P1+P2, and the sum of the transmit power of the first SSB and the transmit power of the second SSB in T2 is P2+P1. The sum of the transmit power of the first SSB and the transmit power of the second SSB remains unchanged in a time unit. Therefore, this can avoid that the transmit power of the first SSB is always higher than the transmit power of the second SSB, to improve the transmission performance of the second-type terminal device as much as possible.

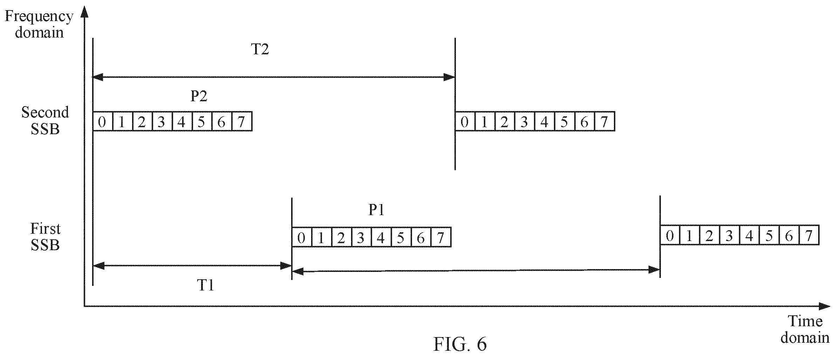

It should be understood that a time domain resource occupied by the first SSB is the same as a time domain resource occupied by the second SSB. In this case, transmit power on a time-frequency resource in which the time domain resource is located includes at least the transmit power of the first SSB and the transmit power of the second SSB. In other words, the transmit power on the time-frequency resource is high. In this case, a PSD of a remaining channel or signal on the time-frequency resource is lower. In other words, transmission performance of the remaining channel or signal on the time-frequency resource is more affected. Therefore, in this embodiment of this application, the time domain resource occupied by the first SSB may be configured to be different from the time domain resource occupied by the second SSB. Relatively, transmit power on a time-frequency resource in which the time domain resource occupied by the first SSB or the second SSB is located is low, to reduce the impact of the introduction of the second SSB on the transmission performance of the another channel or signal. For example, FIG. 6 is a schematic diagram of time domain resources occupied by the first SSB and the second SSB. It can be learned from FIG. 6 that the first SSB and the second SSB each occupy different time domain resources. In this case, the sum of the transmit power of the first SSB and the transmit power of the second SSB is always less than P1+P2 in T2. In this case, the transmission performance of the another channel or signal is less affected.

Particularly, when the first SSB and the second SSB cannot be both included in bandwidth of the terminal device, if time domain positions of the first SSB and the second SSB are the same, the terminal device cannot receive the first SSB and the second SSB at the same time. In this embodiment of this application, the time domain resource occupied by the first SSB is different from the time domain resource occupied by the second SSB. Therefore, the terminal device may receive the first SSB and the second SSB in a time division manner. To be specific, in different time units, the first SSB and the second SSB can be separately received and measured at different frequencies. In this way, the terminal device can measure more SSBs in a same time unit without increasing SSB time-frequency resource overheads. Because the terminal device measures more SSBs in a same time unit, more accurate channel information or channel quality information can be obtained by measuring the SSBs. This helps improve the transmission performance of the terminal device. It may also be understood that compared with a case in which the time domain resource occupied by the first SSB is the same as the time domain resource occupied by the second SSB, when the time domain resource occupied by the first SSB is different from the time domain resource occupied by the second SSB, the SSB time-frequency resource overheads may be reduced in a case in which same measurement performance of the terminal device is obtained.

There may be a plurality of implementation forms in which the time domain resource occupied by the first SSB is different from the time domain resource occupied by the second SSB. For example, the following two implementation forms are included. The network device may configure the time domain resources occupied by the first SSB and the second SSB based on one or more of the following implementation forms. This is flexible.

Implementation form 1: A time domain position of a synchronization signal burst of the first SSB is different from a time domain position of a synchronization signal burst of the second SSB.

To enable the time domain resource occupied by the first SSB to be different from the time domain resource occupied by the second SSB, in this embodiment of this application, the time domain position of the burst of the first SSB may be designed to be different from the time domain position of the burst of the second SSB. For example, the burst of the first SSB and the burst of the second SSB are located in a same system frame X. However, the burst of the first SSB is located in the first half-frame of the system frame X, and the burst of the second SSB is located in the second half-frame of the system frame X. Alternatively, the burst of the first SSB and the burst of the second SSB are located in the first half-frames or the second half-frames of different system frames. For example, the burst of the first SSB is located in the first half of the system frame X, and the burst of the second SSB is located in the first half of a system frame Y where X is not equal to Y.

Implementation form 2: A sending periodicity of the first SSB is different from a sending periodicity of the second SSB.

To enable the time domain resource occupied by the first SSB to be different from the time domain resource occupied by the second SSB, in this embodiment of this application, the sending periodicity of the first SSB may be designed to be different from the sending periodicity of the second SSB. For example, the sending periodicity of the first SSB is 20 ms, and the sending periodicity of the second SSB is 40 ms.

It may be understood that the first-type terminal device and the second-type terminal device have different service types, service requirements, energy saving requirements, and the like. In this embodiment of this application, the sending periodicity of the first SSB is allowed to be different from the sending periodicity of the second SSB, in other words, the sending periodicity of the first SSB may not be associated with the sending periodicity of the second SSB. Therefore, the network device may separately adjust the sending periodicity of the first SSB and the sending periodicity of the second SSB. For example, the network device may adjust the sending periodicity of the first SSB based on the service requirement, the energy saving requirement, or the like of the first-type terminal device, to meet the energy saving requirement of the first-type terminal device. The network device may also adjust the sending periodicity of the second SSB based on the service requirement, the energy saving requirement, or the like of the second-type terminal device, to meet the energy saving requirement of the second-type terminal device. For example, compared with the second-type terminal device, the first-type terminal device has a higher requirement on power consumption, and focuses more on energy saving. In this case, the sending periodicity of the first SSB is larger than the sending periodicity of the second SSB, to meet a power consumption requirement of the second-type terminal device.

In a possible implementation, a quantity of SSB beams in the synchronization signal burst of the first SSB is different from a quantity of SSB beams in the synchronization signal burst of the second SSB. For example, a quantity of SSBs sent in the burst of the first SSB is M, and a quantity of SSBs sent in the burst of the second SSB is N. Both M and N are positive integers, and M is not equal to N.

It may be understood that coverage performance of the first-type terminal device is also different from that of the second-type terminal device because the first-type terminal device and the second-type terminal device have different bandwidth capabilities, antenna quantities, and the like. To improve the transmission performance of the first-type terminal device and the second-type terminal device, the network device separately adjusts the quantity of SSBs sent in the burst of the first SSB and the quantity of SSBs sent in the burst of the second SSB. For example, the network device may adjust the quantity of SSBs sent in the burst of the first SSB based on the coverage performance of the first-type terminal device. Similarly, the network device may also adjust the quantity of SSBs sent in the burst of the second SSB based on the coverage performance of the second-type terminal device, to improve the transmission performance of the second-type terminal device.

In this embodiment of this application, the time domain position of the first SSB or the time domain position of the second SSB may be indicated by the network device. For example, the network device sends resource indication information to the second-type terminal device. The resource indication information indicates the time domain position of the second SSB. For example, the resource indication information includes a number of a system frame, a half-frame, or the like in which the second SSB is located. In this case, the second-type terminal device receives the resource indication information, and may determine that the system frame number or the half-frame number included in the resource indication information is the time domain position of the second SSB. For example, the resource indication information includes a time offset between the time domain position of the second SSB and the time domain position of the first SSB. In this case, the second-type terminal device receives the resource indication information, and may determine the time domain position of the second SSB based on the time offset included in the resource indication information and the time domain position of the first SSB. Alternatively, the network device may reuse an SSB measure timing configuration, for example, an occasion for measuring the SSB by the terminal device, to indicate the time domain position of the SSB. For example, the network device may send a second measure timing configuration (SSB measure timing configuration, SSB-MTC) to the second-type terminal device. It may be understood that the second SSB-MTC is used to configure a measure timing configuration of the second SSB, for example, an occasion for measuring the second SSB by the second-type terminal device. For example, the second SSB-MTC may include a measurement periodicity, duration, and the like of the second SSB. It may be understood that the network device may also send a first SSB-MTC to the first-type terminal device and/or a second terminal device, to indicate the time domain position of the first SSB. The second SSB-MTC may separately configure the time domain position of the second SSB, or may indicate the time domain position of the second SSB by configuring an offset from the time domain position of the first SSB. It should be understood that the resource indication information may be carried in one or more types of signaling, for example, a system information block (system information block, SIB), radio resource control (radio resource control, RRC) signaling, a media access control control element (media access control control control element, MAC CE), or downlink control information (downlink control information, DCI).

In this embodiment of this application, for a case in which the first-type terminal device and the second-type terminal device coexist, the network device may independently configure the first BWP for the first-type terminal device, configure the second BWP for the second-type terminal device, send the first SSB in the first BWP, and send the second SSB in the second BWP. In other words, the new second SSB is introduced. The first-type terminal device may receive the first SSB in the first BWP. The second-type terminal device may receive the first SSB in the first BWP, and may also receive the second SSB in the second BWP. The terminal device may perform one or more of RRM measurement, time and frequency synchronization measurement, channel quality measurement, QCL measurement, and the like based on the received first SSB and/or second SSB. For example, an attribute of a channel carrying other information or a signal is determined based on the received first SSB and/or second SSB.

With reference to the foregoing embodiments and related accompanying drawings, the following describes an SSB sending and receiving method, and implementation of RRM measurement by a terminal device based on a received SSB.

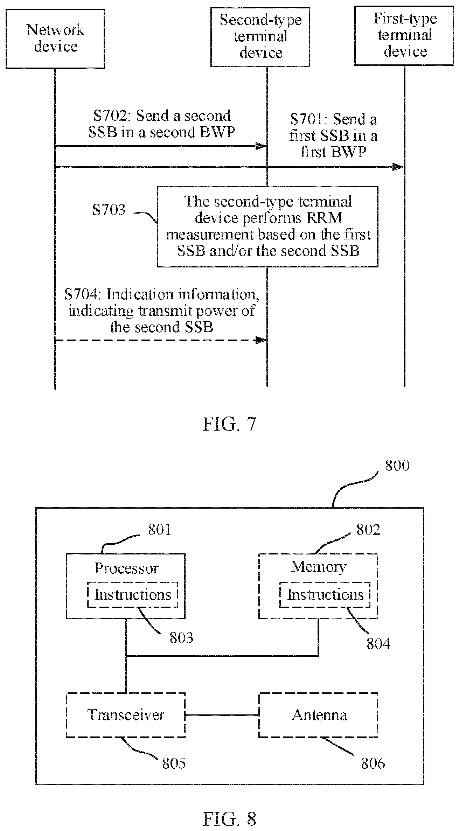

FIG. 7 shows a procedure of an SSB sending and receiving method according to an embodiment of this application. In the following description process, an example in which the method is applied to the network architecture shown in FIG. 1 is used. In addition, the method may be performed by two communication apparatuses. The two communication apparatuses are, for example, a first communication apparatus and a second communication apparatus. The first communication apparatus may be a network device or a communication apparatus that can support the network device in implementing a function required by the method. Alternatively, the first communication apparatus may be a terminal device or a communication apparatus that can support the terminal device in implementing a function required by the method, or certainly may be another communication apparatus, for example, a chip system. The same applies to the second communication apparatus. The second communication apparatus may be a network device or a communication apparatus that can support the network device in implementing a function required by the method. Alternatively, the second communication apparatus may be a terminal device or a communication apparatus that can support the terminal device in implementing a function required by the method, or certainly may be another communication apparatus, for example, a chip system. In addition, implementations of both the first communication apparatus and the second communication apparatus are not limited. For example, the first communication apparatus may be a network device, and the second communication apparatus is a terminal device; both the first communication apparatus and the second communication apparatus are network devices; both the first communication apparatus and the second communication apparatus are terminal devices; or the first communication apparatus is a network device, and the second communication apparatus is a communication apparatus that can support the terminal device in implementing a function required by the method. The network device is, for example, a base station.

For ease of description, an example in which the method is performed by a network device and a terminal device is used below. To be specific, for example, the first communication apparatus is the network device and the second communication apparatus is the terminal device. If this embodiment is applied to the network architecture shown in FIG. 1, the network device described below may be the network device in the network architecture shown in FIG. 1, and the terminal device described below may be a first-type terminal device or a second-type terminal device.

S701: The network device sends a first SSB in a first BWP. Correspondingly, the first-type terminal device receives the first SSB in the first BWP.

S702: The network device sends a second SSB in a second BWP. Correspondingly, the second-type terminal device receives the second SSB in the second BWP.

In this embodiment of this application, the network device is allowed to send the first SSB in the first BWP and send the second SSB in the second BWP. Before sending the first SSB, the network device may determine some sending parameters of the first SSB, for example, transmit power or a time-frequency resource. Similarly, before sending the second SSB, the network device may determine some sending parameters of the second SSB, for example, transmit power or a time-frequency resource.

As described above, considering that additional introduction of the second SSB affects a PDS of another channel or signal in a bandwidth range of the second BWP, the network device may configure the transmit power of the second SSB to be lower than the transmit power of the first SSB. For another example, considering that an actual service requirement of the first-type terminal device (or the second-type terminal device) may change in different time units, the network device may adjust the transmit power of the first SSB based on the actual service requirement of the first-type terminal device (or the second-type terminal device). The network device may flexibly adjust the transmit power of the first SSB and the transmit power of the second SSB, to improve transmission performance of the first-type terminal device and the second-type terminal device as much as possible, and reduce impact on transmission performance of the another channel or signal. As described above again, the network device may flexibly adjust a time domain resource occupied by the first SSB and a time domain resource occupied by the second SSB, to further reduce the impact on the transmission performance of the another channel or signal on the time-frequency resource, and improve an RRM measurement result, so as to improve transmission performance of the terminal device.

It should be noted that sending of the first SSB by the network device in the first BWP and sending of the second SSB by the network device in the second BWP are performed independently. In other words, a sequence of S701 and S702 is not limited. The first-type terminal device may receive the first SSB in the first BWP. The second-type terminal device may receive the first SSB in the first BWP, and may also receive the second SSB in the second BWP. It should be understood that the second-type terminal device may obtain the second SSB in the second BWP, that is, do not need to always switch to the first BWP to obtain the SSB. Therefore, a quantity of BWP switching times or a quantity of radio frequency retuning times can be reduced, to reduce energy consumption and complexity of the second-type terminal device, reduce data transmission interruption caused by BWP switching or radio frequency retuning, and improve transmission efficiency of the second-type terminal device.

S703: The second-type terminal device performs RRM measurement based on the first SSB and/or the second SSB.

The network device is allowed to send the first SSB in the first BWP, and send the second SSB in the second BWP. The second-type terminal device may receive the first SSB in the first BWP, and may also receive the second SSB in the second BWP. It should be understood that the second-type terminal device receives the first SSB, and may perform the RRM measurement based on the first SSB. The second-type terminal device receives the second SSB, and may perform the RRM measurement based on the second SSB. When the second-type terminal device receives the first SSB and the second SSB, the second-type terminal device may perform the RRM measurement based on the first SSB and/or the second SSB. If it is agreed that the second-type terminal device performs the RRM measurement based on the first SSB, it is inevitable that the second-type terminal device needs to switch from the second BWP to the first BWP. Therefore, in this embodiment of this application, it may be specified that an SSB used for the RRM measurement is an SSB in a BWP in which a paging resource is located.

A configuration of the paging resource of the second-type terminal device is not limited in this embodiment of this application. For example, all paging resources of the second-type terminal device may be configured within a first BWP range or within a second BWP range. Alternatively, a part of all the paging resources of the second-type terminal device are configured within the first BWP range, and the other part of the paging resources are configured within the second BWP range. If all the paging resources of the second-type terminal device are within the second BWP range, the second-type terminal device performs the RRM measurement based on the second SSB. If all the paging resources of the second-type terminal device are within the first BWP range, the second-type terminal device performs the RRM measurement based on the first SSB. If a part of the paging resources of the second-type terminal device are configured in the first BWP, and the other part of the paging resources are configured in the second BWP, the second-type terminal device whose paging resource is in the first BWP performs the RRM measurement based on the first SSB, and the second-type terminal device whose paging resource is in the second BWP performs the RRM measurement based on the second SSB. In this way, it can be ensured that the second-type terminal device performs the RRM measurement in a process of monitoring paging, and does not need to perform BWP switching, to reduce power consumption of the second-type terminal device.

Optionally, in this embodiment of this application, it may alternatively be specified that the second-type terminal device performs the RRM measurement based on both the first SSB and the second SSB. For example, when the first SSB and the second SSB are located in different time domain resources, the second-type terminal device may separately measure the first SSB and the second SSB on the different time domain resources, and a measurement result is jointly determined by measurement results of the first SSB and the second SSB. The second-type terminal device in a limited coverage area performs measurement based on the first SSB and the second SSB. This can improve measurement performance of the terminal device, to improve the transmission performance of the terminal device. In a possible implementation, that the second-type terminal device performs the RRM measurement based on the first SSB and the second SSB may be predefined or indicated by the network device by using signaling. Alternatively, when the measurement result of the first SSB or the second SSB is lower than a threshold, the terminal device starts joint measurement of the first SSB and the second SSB. The threshold may be indicated by the network device by using signaling, predefined in a protocol, or determined by the terminal device based on an algorithm.

Optionally, in this embodiment of this application, it may alternatively be specified that the second-type terminal device performs the RRM measurement based only on the first SSB. Alternatively, the network device may indicate the second-type terminal device to perform the RRM measurement based only on the first SSB. It may be understood that the transmit power, a beam, and the like of the second SSB are different from those of the first SSB. For example, the transmit power of the second SSB is lower than the transmit power of the first SSB. If the second-type terminal performs the measurement based on the second SSB, an obtained measurement result (for example, a received power value) is low. The second-type terminal device may perform a process such as cell selection/reselection and switching based on the measurement result, and a selected cell may not be preferred. In this scenario, that the second-type terminal device performs the RRM measurement based only on the first SSB is predefined or indicated by the network device by using the signaling, to improve the measurement result as much as possible, so that a cell selected by the terminal device based on the measurement result is preferred.

After determining an SSB used for the RRM measurement, the second-type terminal device performs the RRM measurement based on the determined SSB. It may be understood that, if transmit power of the SSB is low, accuracy of a measurement result obtained based on the SSB is low. Therefore, accuracy of determining cell coverage is also low. Therefore, in this embodiment of this application, it is specified that only an SSB whose transmit power is higher than a preset threshold is used for the RRM measurement. This can improve the accuracy of determining the cell coverage. For example, the SSB used for the RRM measurement is the second SSB. The second-type terminal device may perform the RRM measurement based on the second SSB whose transmit power is higher than the preset threshold. In other words, a second SSB whose transmit power is lower than the preset threshold is not used to perform the RRM measurement, to improve accuracy of the RRM measurement as much as possible.

In an alternative implementation, the second-type terminal device may alternatively perform the RRM measurement based on all received second SSBs. To be specific, even if transmit power of some second SSBs is lower than the preset threshold, these second SSBs are still used to perform the RRM measurement. Because the accuracy of the RRM measurement result obtained based on the second SSB whose transmit power is lower than the preset threshold is low, the obtained RRM measurement result may be corrected in this embodiment of this application. To be specific, an actual measurement result obtained based on the second SSB is adjusted, and an adjusted measurement result is used as a final RRM measurement result. For example, the RRM measurement result is a sum of the measurement result of the second SSB and an offset, and the offset is related to the transmit power of the first SSB and the transmit power of the second SSB. For example, the offset is a difference between transmit power P1 of the first SSB and transmit power P2 of the second SSB. Although the transmit power of the SSB used for the RRM measurement is low, an accurate RRM measurement result can be obtained by using the obtained actual measurement result of the SSB, to improve the accuracy of determining the cell coverage.

In a possible implementation, based on different configurations of the paging resources of the second-type terminal device, BWPs used by the second-type terminal device to initiate a random access process are also different.

For example, if all the paging resources of the second-type terminal device are within the first BWP range, it is considered by default that the second-type terminal device performs the RRM measurement based on the first SSB. The second-type terminal device may send the random access process in the first BWP and/or the second BWP, for example, transmission of Msg2, Msg4, and the like in the random access process in the first BWP and/or the second BWP. The first BWP may be used for transmission of a message other than a message in the random access process, for example, transmission of a system message or a paging message.

For example, the paging resources of the second-type terminal device may be configured in two BWPs. For example, a part of the paging resources of the second-type terminal device are configured in the first BWP, and the other part of the paging resources are configured in the second BWP. In this case, it may be agreed that a BWP used for transmission of the message in the random access process is consistent with a BWP used for transmission of the paging message. For example, if the network device sends the paging message in the first BWP, the network device sends Msg2 or Msg4 to the second-type terminal device in the first BWP. For another example, if the network device sends the paging message in the second BWP, the network device sends Msg2 or Msg4 to the second-type terminal device in the second BWP.

It should be noted that S703 is described by using only the RRM measurement as an example. In addition to the RRM measurement, the first SSB and/or the second SSB may be further used for time and frequency synchronization measurement, path loss measurement, beam management, and the like. Methods for receiving and measuring the second SSB and/or the second SSB in S703 are all applicable to the process.

It may be understood that, in addition to sending the SSB in a BWP configured for the terminal device, the network device may further send other information, for example, one or more of the paging message, the system message, a random access response message, or a contention resolution message. For ease of description, the paging message, the system message, the random access response message, and the contention resolution message are collectively referred to as first information below. The first information usually has a QCL relationship with the SSB. In this embodiment of this application, the second BWP, namely, the first SSB and the second SSB, is introduced. When the network device sends the first information in the first BWP and/or the second BWP, the terminal device may infer, based on the first SSB or the second SSB, some characteristics of a channel for sending the first information. In other words, the first SSB or the second SSB may have the QCL relationship with the first information. It should be noted that, in this specification, that the first information has the QCL relationship with the first SSB (or the second SSB) means that a DMRS antenna port of a PDSCH carrying the first information has the QCL relationship with the first SSB (or the second SSB), or a DMRS antenna port of a PDCCH for scheduling the first information has the QCL relationship with the first SSB (or the second SSB). Based on different BWPs that carry the first information and different first information, the SSB having the QCL relationship with the first information also varies. In this embodiment of this application, it may be specified that the DMRS antenna port of the PDSCH that carries the first information has the QCL relationship with the first SSB or the second SSB, or the DMRS antenna port of the PDCCH for scheduling the first information has the QCL relationship with the first SSB or the second SSB. In other words, when the first SSB and the second SSB exist, a specific SSB having the QCL relationship with the channel for sending the first information is specified, to ensure transmission performance of the first information.

For example, the first information is the system message or the paging message. In this case, if the BWP that carries the first information is the first BWP, the DMRS antenna port of the PDSCH that carries the first information has the QCL relationship with the first SSB, and/or the DMRS antenna port of the PDCCH for scheduling the first information has the QCL relationship with the first SSB. If the BWP that carries the first information is the second BWP, the DMRS antenna port of the PDSCH that carries the first information has the QCL relationship with the second SSB, and/or the DMRS antenna port of the PDCCH for scheduling the first information has the QCL relationship with the second SSB.

For another example, the first information is a random access response message or a contention resolution message, and the first BWP and the second BWP respectively correspond to different random access channel occasions (random access channel occasions, ROs). In this case, if the BWP that carries the first information is the first BWP, the DMRS antenna port of the PDSCH that carries the first information has the QCL relationship with the first SSB, and/or the DMRS antenna port of the PDCCH for scheduling the first information has the QCL relationship with the first SSB. If the BWP that carries the first information is the second BWP, the DMRS antenna port of the PDSCH that carries the first information has the QCL relationship with the second SSB, and/or the DMRS antenna port of the PDCCH for scheduling the first information has the QCL relationship with the second SSB.

For another example, the first information is a random access response message or a contention resolution message, but the first BWP and the second BWP share a first RO. In this case, if the network device configures a mapping relationship between the first SSB and the first RO, the DMRS antenna port of the PDSCH that carries the first information has the QCL relationship with the first SSB, and/or the DMRS antenna port of the PDCCH for scheduling the first information has the QCL relationship with the first SSB. If the network device configures the mapping relationship between the first SSB and the first RO and a mapping relationship between the second SSB and the first RO, and the BWP that carries the first information is the first BWP, the DMRS antenna port of the PDSCH that carries the first information has the QCL relationship with the first SSB, and/or the DMRS antenna port of the PDCCH for scheduling the first information has the QCL relationship with the first SSB. If the network device configures the mapping relationship between the first SSB and the first RO and the mapping relationship between the second SSB and the first RO, and the BWP that carries the first information is the second BWP, the DMRS antenna port of the PDSCH that carries the first information has the QCL relationship with the second SSB, and/or the DMRS antenna port of the PDCCH for scheduling the first information has the QCL relationship with the second SSB.

S704: The network device sends indication information to the second-type terminal device. Correspondingly, the second-type terminal device receives the indication information from the network device. The indication information indicates the transmit power of the second SSB.

In a possible scenario, the second-type terminal device needs to obtain some pieces of information by using the transmit power of the second SSB. For example, the second-type terminal device may determine a path loss of signal transmission based on the transmit power of the second SSB and received power of the second SSB, and adjust transmit power of a to-be-sent signal based on the path loss, to improve signal transmission reliability. For example, transmit power of a random access message 1, transmit power of a random access message 3, and transmit power of a channel or signal, for example, a PUCCH, that carries a HARQ feedback of a random access message 4 may be determined. Therefore, in this embodiment of this application, the network device may notify the transmit power of the second SSB to the second-type terminal device. For example, the network device may send the indication information to the second-type terminal device. The indication information may indicate the transmit power of the second SSB. The power indication information may be carried in one or more types of signaling such as a SIB, RRC signaling, a MAC CE, or DCI.

The indication information may directly indicate the transmit power of the second SSB, or may indirectly indicate the transmit power of the second SSB. For example, the indication information may include the transmit power of the second SSB. The second-type terminal device receives the indication information, and may obtain the transmit power of the second SSB from the indication information. This is simple. For another example, the indication information includes a power offset. The power offset is a difference between the transmit power of the second SSB and the transmit power of the first SSB. After receiving the indication information and obtaining the power offset, the second-type terminal device may determine the transmit power of the second SSB based on the power offset and the transmit power of the first SSB.

It should be noted that S704 is not a mandatory step, and therefore is illustrated by dashed lines in FIG. 7. If S704 is performed, S704 is not related to a sequence of S701 and S703. To be specific, S704 may be performed after S701, or may be performed after S703.

The foregoing describes various solutions in the scenario in which the second SSB is additionally introduced to the second BWP configured for the second-type terminal device, for example, how to send the second SSB, namely, some conditions needing to be met for sending the second SSB, for example, a condition that needs to be met by transmit power or a time-frequency resource position of the second SSB; or for another example, how the second-type terminal performs the RRM measurement.

It may be understood that the network device may configure the second BWP for the second-type terminal device, may configure the first BWP for the second-type terminal device, or may configure the first BWP and the second BWP for the second-type terminal device. The following describes how the network device configures the BWP for the second-type terminal device. For example, the network device may indicate, by using second indication information, the BWP configured for the second-type terminal device. The second indication information may be carried in one or more of a SIB, RRC signaling, a MAC CE, DCI, or the like.

For example, the second indication information is a bitmap whose length is 2 bits, and each bit corresponds to one BWP. For example, the 1^{st} bit in the 2 bits corresponds to the first BWP, and the 2^{nd} bit in the 2 bits corresponds to the second BWP. If a value of a bit corresponding to a BWP is a first value, the BWP is a BWP configured for the second-type terminal device or the second-type terminal device may use the BWP. Correspondingly, if a value of a bit corresponding to a BWP is a second value, the BWP is not a BWP configured for the second-type terminal device or the second-type terminal device cannot use the BWP It may be understood that when the first value is 0, the second value is 1; or when the first value is 1, the second value is 0. For ease of description, in this specification, for example, the first value is 1, and the second value is 0. For example, content indicated by the 2-bit bitmap may be shown in Table 1.

**Table 1**

| Bit state | Indicated available BWP |
|---|---|
| 00 | Both the first BWP and the second BWP are unavailable |
| 01 | The first BWP is unavailable, and the second BWP is available |
| 10 | The first BWP is available, and the second BWP is unavailable |
| 11 | Both the first BWP and the second BWP are available |

It should be noted that an example in which the network device configures the first BWP and/or the second BWP for the second terminal device is used in this specification. However, in this embodiment of this application, a quantity of BWPs configured by the network device for the second-type terminal device is not limited. For example, the network device may configure more BWPs for the second-type terminal device. To be specific, in addition to the first BWP and/or the second BWP, the network device may further configure a third BWP, even a fourth BWP, and the like for the second-type terminal device. It should be understood that the network device configures more BWPs for the second-type terminal device. Correspondingly, a quantity of bits occupied by the second indication information may vary with a quantity of the BWPs. For example, if there are Y BWPs, the second indication information may be a bitmap whose length is Y bits.

For example, the first BWP and the second BWP exist. It may be agreed that a BWP other than the first BWP is a BWP available to the second-type terminal device by default. In this case, the network device may indicate, by using the second indication information, whether the first BWP is available. For example, if the second indication information indicates that the first BWP is available, the network device configures the first BWP and the second BWP for the second-type terminal device. For example, if the second indication information indicates that the first BWP is unavailable, the network device configures the second BWP for the second-type terminal device. In a possible implementation, the second indication information may occupy 1 bit. If a value of the 1 bit is the first value, it indicates that the first BWP is available. Correspondingly, if the value of the 1 bit is the second value, it indicates that the first BWP is unavailable.

In a possible implementation, the network device may alternatively configure, for the second-type terminal device by using the second indication information, a BWP used for transmission on each channel. For example, the network device may configure a BWP for a paging message, SIB1, a random access message 2, a random access message 4, other system information (other system information, OSI), or the like. The foregoing example is still used. The first BWP and the second BWP exist. The network device may indicate, by using the second indication information occupying 2 bits, whether the first BWP and the second BWP are available. Assuming that there are X channels, the second indication information may occupy 2X bits, and each channel corresponds to 2 bits in the 2X bits. In other words, the 2X bits are in one-to-one correspondence with the X channels. Alternatively, the first BWP and the second BWP exist. It may be agreed that a BWP other than the first BWP is a BWP available to the second-type terminal device by default. In this case, for each channel, the network device may indicate, by using 1-bit second indication information, whether the first BWP is available.

In this embodiment of this application, the network device may independently configure an initial downlink BWP for each of the first-type terminal device and the second-type terminal device, and send the SSB in each of the independently configured initial downlink BWPs. For example, the network device configures the first BWP for the first-type terminal device, and configures the second BWP for the second-type terminal device. The network device may send the first SSB in the first BWP, and send the second SSB in the second BWP. The first-type terminal device may receive the first SSB in the first BWP. The second-type terminal device may receive the second SSB in the second BWP without always switching from the second BWP to the first BWP, to reduce a quantity of BWP switching times and a quantity of frequency tuning times of the second-type terminal device. This reduces power consumption of the second-type terminal device. In addition, the network device may configure the transmit power of the second SSB to be lower than the transmit power of the first SSB. Because the transmit power of the second SSB is lower than the transmit power of the first SSB, impact of additional introduction of the second SSB on transmission performance of another channel or signal within a carrier bandwidth range can be reduced as much as possible.

In the foregoing embodiments provided in this application, the method provided in embodiments of this application is described from a perspective of interaction between the network device and the terminal device. The steps performed by the network device may alternatively be separately implemented by different communication apparatuses. For example, a first apparatus is configured to determine the first SSB and the second SSB, and a second apparatus is configured to send the first SSB and the second SSB. In other words, the first apparatus and the second apparatus jointly complete the steps performed by the network device in embodiments of this application. A specific division manner is not limited in this application. When the network architecture includes one or more DUs, one or more CUs, and one or more radio frequency units (RUs), the steps performed by the network device may be separately implemented by the DUs, the CUs, and the RUs. To implement functions in the method provided in the foregoing embodiment of this application, the terminal device and the network device may include a hardware structure and/or a software module, and implement the foregoing functions in a form of hardware structure, software module, or a combination of the hardware structure and the software module. Whether a function in the foregoing functions is performed by the hardware structure, the software module, or the combination of the hardware structure and the software module depends on a specific application and a design constraint of the technical solutions.

Based on a same inventive concept of the method embodiment, an embodiment of this application provides a communication apparatus. The following describes, with reference to the accompanying drawings, the communication apparatus configured to implement the foregoing method in embodiments of this application.

FIG. 8 is a schematic block diagram of a communication apparatus 800 according to an embodiment of this application. The communication apparatus 800 may be the network device in FIG. 1, and is configured to implement the method for the network device in the foregoing method embodiment. For a specific function, refer to the descriptions in the foregoing method embodiment.

The communication apparatus 800 includes one or more processors 801. The processor 801 may also be referred to as a processing unit, and may implement a specific control function. The processor 801 may be a general-purpose processor, a dedicated processor, or the like. For example, the processor 801 includes a baseband processor, a central processing unit, an application processor, a modem processor, a graphics processor, an image signal processor, a digital signal processor, a video codec processor, a controller, a memory, and/or a neural network processor. The baseband processor may be configured to process a communication protocol and communication data. The central processing unit may be configured to: control the communication apparatus 800, execute a software program, and/or process data. Different processors may be independent components, or may be integrated into one or more processors, for example, integrated into one or more application-specific integrated circuits.

Optionally, the communication apparatus 800 includes one or more memories 802, configured to store instructions 804. The instructions may be run on the processor, to enable the communication apparatus 800 to perform the method described in the foregoing method embodiment. Optionally, the memory 802 may further store the data. The processor and the memory may be separately disposed, or may be integrated together.

Optionally, the communication apparatus 800 may include instructions 803 (sometimes may also be referred to as code or a program). The instruction 803 may be run on the processor, to enable the communication apparatus 800 to perform the method described in the foregoing embodiment. The processor 801 may store the data.

Optionally, the communication apparatus 800 may further include a transceiver 805 and an antenna 806. The transceiver 805 may be referred to as a transceiver unit, a transceiver machine, a transceiver circuit, a transceiver, an input/output interface, or the like, and is configured to implement receiving and sending functions of the communication apparatus 800 through the antenna 806.

Optionally, the communication apparatus 800 may further include one or more of the following parts: a wireless communication module, an audio module, an external memory interface, an internal memory, a universal serial bus (universal serial bus, USB) interface, a power management module, an antenna, a loudspeaker, a microphone, an input/output module, a sensor module, a motor, a camera, a display, or the like. It may be understood that, in some embodiments, the communication apparatus 800 may include more or fewer parts, some parts may be integrated, or some parts may be split. These parts may be implemented by hardware, software, or a combination of the software and the hardware.

The processor 801 and the transceiver 805 described in this application may be implemented on an integrated circuit (integrated circuit, IC), an analog IC, a radio frequency integrated circuit (radio frequency identification, RFID), a hybrid signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

An embodiment of this application provides a terminal device. The terminal device (for ease of description, referred to as a UE) may be used in the foregoing embodiments. The terminal device includes a corresponding means (means), a unit, and/or a circuit used to implement a function of the UE in the embodiment shown in FIG. 7. For example, the terminal device includes a transceiver module, configured to support the terminal device in implementing receiving and sending functions; and a processing module, configured to support the terminal device in processing a signal.

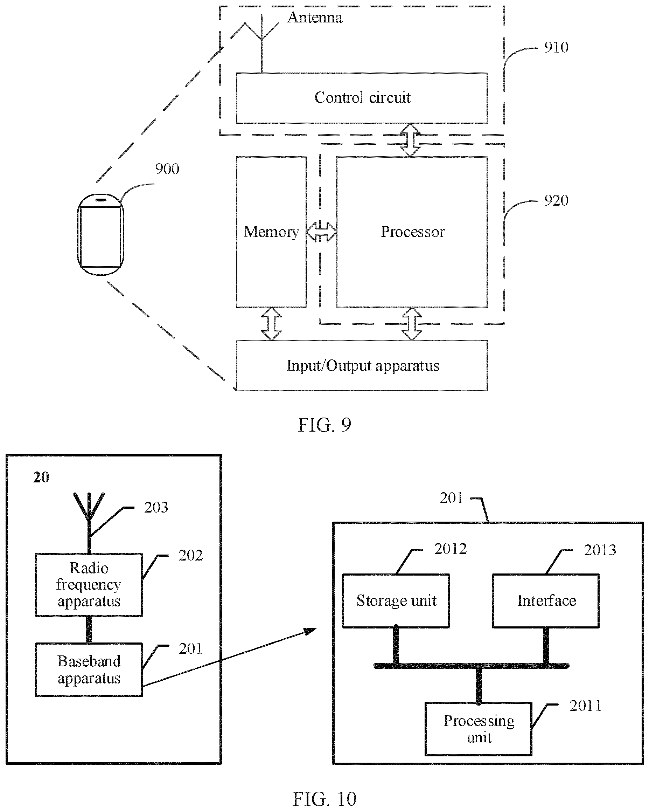

FIG. 9 is a schematic diagram of a structure of a terminal device according to an embodiment of this application.

The terminal device 900 shown in FIG. 9 is applicable to the system shown in FIG. 1. For ease of description, FIG. 9 shows only main parts of the terminal device 900. As shown in FIG. 9, the terminal device 900 includes a processor, a memory, a control circuit, an antenna, and an input/output apparatus. The processor is mainly configured to: process a communication protocol and communication data, control the entire terminal device 900, execute a software program, and process data of the software program. The memory is mainly configured to store the software program and the data. The control circuit is mainly configured to: perform conversion between a baseband signal and a radio frequency signal, and process the radio frequency signal. The antenna is mainly configured to receive and send the radio frequency signal in a form of electromagnetic wave. The input/output apparatus, for example, a touchscreen, a display, a microphone, or a keyboard, is mainly configured to: receive data input by a user and output data to the user.

For example, the terminal device 900 is a mobile phone. After the terminal device 900 is powered on, the processor may read a software program in a storage unit, interpret and execute instructions of the software program, and process data of the software program. When data needs to be sent wirelessly, the processor performs baseband processing on the to-be-sent data, and outputs a baseband signal to the control circuit. The control circuit performs radio frequency processing on the baseband signal, and sends, through the antenna, a radio frequency signal in the form of electromagnetic wave. When data is to be sent to the terminal device 900, the control circuit receives the radio frequency signal through the antenna, converts the radio frequency signal into a baseband signal, and outputs the baseband signal to the processor. The processor converts the baseband signal into data and processes the data.

A person skilled in the art may understand that, for ease of description, FIG. 9 shows only one memory and only one processor. In some embodiments, the terminal device 900 may include a plurality of processor and memories. The memory may also be referred to as a storage medium, a storage device, or the like. This is not limited in this embodiment of the present invention.

In an optional implementation, the processor may include a baseband processor and a central processing unit. The baseband processor is mainly configured to process a communication protocol and communication data. The central processing unit is mainly configured to: control the entire terminal device 900, execute a software program, and process data of the software program. The processor in FIG. 9 integrates functions of the baseband processor and the central processing unit. A person skilled in the art may understand that the baseband processor and the central processing unit may alternatively be processors independent of each other, and are interconnected by using a technology such as through a bus. The terminal device 900 may include a plurality of baseband processors to adapt to different network standards. The terminal device 900 may include a plurality of central processing units to enhance a processing capability of the terminal device. Parts of the terminal device 900 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor; or may be stored in a storage unit in a form of software program, and the processor executes the software program to implement a baseband processing function.

In an example, the antenna and the control circuit that have receiving and sending functions may be considered as a transceiver unit 910 of the terminal device 900, and the processor having a processing function may be considered as a processing unit 920 of the terminal device 900. As shown in FIG. 9, the terminal device 900 includes the transceiver unit 910 and the processing unit 920. The transceiver unit may also be referred to as a transceiver, a transceiver machine, a transceiver apparatus, or the like. Optionally, a component that is in the transceiver unit 910 and that is configured to implement the receiving function may be considered as a receiving unit, and a component that is in the transceiver unit 910 and that is configured to implement the sending function may be considered as a sending unit. In other words, the transceiver unit 910 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like.

An embodiment of this application further provides a network device. The network device may be used in the foregoing embodiments. The network device includes a means (means), a unit, and/or a circuit used to implement a function of the network device in the embodiment shown in FIG. 7. For example, the network device includes a transceiver module, configured to support the terminal device in implementing receiving and sending functions; and a processing module, configured to support the network device in processing a signal. It may be understood that a first network device and a second network device are relative to one or some UEs, and functions of the first network device and the second network device are interchangeable relative to some other UEs.

FIG. 10 is a schematic diagram of a structure of a network device according to an embodiment of this application. As shown in FIG. 10, the network device 20 is applicable to the system shown in FIG. 1. The network device 20 is, for example, the network device shown in FIG. 1. The network device 20 may serve as a first network device that is relative to one or some UEs and that has a function of the first network device, or may serve as a second network device that is relative to one or some UEs and that has a function of the second network device. The network device includes a baseband apparatus 201, a radio frequency apparatus 202, and an antenna 203. In an uplink direction, the radio frequency apparatus 202 receives, through the antenna 203, information sent by a terminal device, and sends the information sent by the terminal device to the baseband apparatus 201 for processing. In a downlink direction, the baseband apparatus 201 processes the information of the terminal device, and sends processed information to the radio frequency apparatus 202. The radio frequency apparatus 202 processes the information of the terminal device, and sends processed information to the terminal device through the antenna 203.

The baseband apparatus 201 includes one or more processing units 2011, a storage unit 2012, and an interface 2013. The processing unit 2011 is configured to support the network device in performing a function of the network device in the foregoing method embodiment. The storage unit 2012 is configured to store a software program and/or data. The interface 2013 is configured to exchange information with the radio frequency apparatus 202. The interface includes an interface circuit, configured to input and output information. In an implementation, the processing unit is an integrated circuit, for example, one or more ASICs, one or more DSPs, one or more FPGAs, or a combination of these types of integrated circuits. These integrated circuits may be integrated together to form a chip. The storage unit 2012 and the processing unit 2011 may be located on a same chip, namely, an on-chip storage element. Alternatively, the storage unit 2012 and the processing unit 2011 may be located on a chip different from that of the processing element 2011, namely, an off-chip storage element. The storage unit 2012 may be one memory, or may be a general term of a plurality of memories or storage elements.

The network device may implement some or all of the steps in the foregoing method embodiments in a form of scheduling a program by using one or more processing units. For example, a corresponding function of the network device in FIG. 7 is implemented. The one or more processing units may support radio access technologies of a same standard, or may support radio access standards of different standards.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a terminal device, or may include a plurality of network devices and a plurality of terminal devices. For example, the communication system includes a network device and a terminal device that are configured to implement related functions in FIG. 7.

The network device is configured to implement a function related to a network part in FIG. 7. The terminal device is configured to implement a function related to the terminal device in FIG. 7. For details, refer to the related descriptions in the foregoing method embodiment. Details are not described herein again.

An embodiment of this application further provides a computer-readable storage medium, including instructions. When the instructions are run on a computer, the computer is enabled to perform the method performed by the network device in FIG. 7. Alternatively, when the instructions are run on a computer, the computer is enabled to perform the method performed by the terminal device in FIG. 7.

An embodiment of this application further provides a computer program product, including instructions. When the instructions are run on a computer, the computer is enabled to perform the method performed by the network device in FIG. 7. Alternatively, when the instructions are run on a computer, the computer is enabled to perform the method performed by the terminal device in FIG. 7.

An embodiment of this application provides a chip system. The chip system includes a processor, and may further include a memory, configured to implement a function of the network device or the terminal in the foregoing method, or is configured to implement functions of the network device and the terminal in the foregoing method. The chip system may include a chip, or may include the chip and another discrete component.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with various illustrative logical blocks (illustrative logical blocks) and steps (step) described in embodiments disclosed in this specification may be implemented by electronic hardware or a combination of computer software and the electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed operation process of the foregoing system, apparatus, and unit, refer to a corresponding process in the foregoing method embodiment. Details are not described herein again.

In the several embodiments provided in this application, it should be understood that the disclosed systems, apparatuses and methods may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

When the functions are implemented in a form of software functional unit and sold or used as an independent product, the functions may be stored in a computer-readable storage medium. Based on such an understanding, the technical solutions of this application essentially, or the part contributing to an existing technology, or all or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

It is clear that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A signal sending method, comprising:
determining a first synchronization signal and physical broadcast channel block SSB and a second SSB, wherein a sending periodicity of the second SSB is larger than a sending periodicity of the first SSB; and
sending the first SSB in a first bandwidth part BWP, and sending the second SSB in a second BWP, wherein the first BWP and the second BWP are within first bandwidth.

2. The method according to claim 1, wherein a time domain resource occupied by the first SSB is different from a time domain resource occupied by the second SSB.

3. The method according to claim 2, wherein that a time domain resource occupied by the first SSB is different from a time domain resource occupied by the second SSB comprises:
a time domain position of a synchronization signal burst of the first SSB is different from a time domain position of a synchronization signal burst of the second SSB.

4. The method according to claim 3, wherein the synchronization signal burst of the first SSB and the synchronization signal burst of the first SSB are in a same system frame X, and the first SSB and the second SSB are respectively located in the first half-frame and the second half-frame of the system frame X; or
the synchronization signal burst of the first SSB and the synchronization signal burst of the second SSB are in different system frames.

5. The method according to claim 3 or 4, wherein the method further comprises:
sending resource indication information to a second-type terminal device, wherein the resource indication information indicates a time domain position of the second SSB.

6. The method according to claim 5, wherein the resource indication information comprises the time domain position of the second SSB.

7. The method according to any one of claims 1 to 6, wherein the first SSB is received by a first-type terminal device and the second-type terminal device in the first BWP, and the second SSB is received by the second-type terminal device in the second BWP.

8. The method according to any one of claims 1 to 7, wherein the second SSB is for a terminal device to perform radio resource management RRM measurement.

9. The method according to any one of claims 1 to 8, wherein the first bandwidth is first carrier bandwidth.

10. A signal receiving method, comprising:
receiving a first synchronization signal and physical broadcast channel block SSB in a first bandwidth part BWP, and/or receiving a second SSB in a second BWP, wherein a sending periodicity of the second SSB is larger than a sending periodicity of the first SSB; and
performing radio resource management RRM measurement based on the first SSB and/or the second SSB, wherein the first BWP and the second BWP are within first bandwidth.

11. The method according to claim 10, wherein a time domain resource occupied by the first SSB is different from a time domain resource occupied by the second SSB.

12. The method according to claim 11, wherein that a time domain resource occupied by the first SSB is different from a time domain resource occupied by the second SSB comprises:
a time domain position of a synchronization signal burst of the first SSB is different from a time domain position of a synchronization signal burst of the second SSB.

13. The method according to claim 12, wherein the synchronization signal burst of the first SSB and the synchronization signal burst of the first SSB are in a same system frame X, and the first SSB and the second SSB are respectively located in the first half-frame and the second half-frame of the system frame X; or
the synchronization signal burst of the first SSB and the synchronization signal burst of the second SSB are in different system frames.

14. The method according to claim 12 or 13, wherein the method further comprises:
receiving resource indication information, wherein the resource indication information indicates a time domain position of the second SSB.

15. The method according to claim 14, wherein the resource indication information comprises the time domain position of the second SSB.

16. The method according to any one of claims 10 to 15, wherein the first SSB is received by a first-type terminal device and the second-type terminal device in the first BWP, and the second SSB is received by the second-type terminal device in the second BWP.

17. The method according to any one of claims 10 to 16, wherein the second SSB is for a terminal device to perform one or more of RRM measurement, time and time-frequency synchronization measurement, channel quality measurement, QCL measurement, and the like.

18. The method according to any one of claims 10 to 17, wherein the first bandwidth is first carrier bandwidth.

19. A communication apparatus, comprising a module configured to perform the method according to any one of claims 1 to 18.

20. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 18 by using a logic circuit or by executing code instructions.

21. A computer-readable storage medium, wherein the computer-readable storage medium stores a computer program, and when the computer program is run, the method according to any one of claims 1 to 18 is implemented.

22. A computer-readable storage medium, wherein the computer program product comprises computer program code, and when the computer program code is run, the method according to any one of claims 1 to 18 is implemented.
